# EUROPEAN PATENT APPLICATION

(11) **EP 4 277 378 A1**
(43) Date of publication of application: **15.11.2023**
(21) Application number: 21918489.2
(22) Date of filing: 14.01.2021
(51) Int. Cl.: H04W 64/00, H04L 5/00

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: SHI, Zhihua, Dongguan, Guangdong 523860 (CN); CHEN, Wenhong, Dongguan, Guangdong 523860 (CN); HUANG, Yingpei, Dongguan, Guangdong 523860 (CN)
(74) Representative: Taor, Simon Edward William
(86) International application number: PCT/CN2021/071937
(87) International publication number: WO 2022/151281

(57) **Abstract**

Embodiments of the present disclosure provide a wireless communication method, a terminal device, and a network device. The network device can configure positioning signals, on different carriers, that can be combined to optimize positioning performance. The wireless communication method includes: receiving, by the terminal device, first signaling transmitted by the network device. The first signaling is used to indicate one or more first downlink positioning signal sets. Each of the one or more first downlink positioning signal sets includes a plurality of downlink positioning signals occupying different frequency domain resources. The plurality of downlink positioning signals is used jointly to implement a positioning function.

## Description

### FIELD

Embodiments of the present disclosure relate to the field of communication, and more particularly, to a wireless communication method, a terminal device, and a network device.

### BACKGROUND

In a New Radio (NR) system, a Positioning Reference Signal (PRS) is introduced on a downlink and a Sounding Reference Signal (SRS) for positioning is introduced on an uplink to support positioning technologies. To improve positioning accuracy, signals for positioning on different carriers can be used jointly. For example, positioning signals on different carriers can be combined as one signal having a larger bandwidth. However, it is an urgent problem to be solved regarding how to configure positioning signals, on different carriers, that can be combined.

### SUMMARY

Embodiments of the present disclosure provide a wireless communication method, a terminal device, and a network device. The network device can configure positioning signals, on different carriers, that can be combined to optimize positioning performance.

In a first aspect, a wireless communication method is provided. The method includes: receiving, by a terminal device, first signaling transmitted by a network device. The first signaling is used to indicate one or more first downlink positioning signal sets. Each of the one or more first downlink positioning signal sets includes a plurality of downlink positioning signals occupying different frequency domain resources. The plurality of downlink positioning signals is used jointly to implement a positioning function.

In a second aspect, a wireless communication method is provided. The method includes: transmitting, by a network device, first signaling to a terminal device. The first signaling is used to indicate one or more first downlink positioning signal sets. Each of the one or more first downlink positioning signal sets includes a plurality of downlink positioning signals occupying different frequency domain resources. The plurality of downlink positioning signals is used jointly to implement a positioning function.

In a third aspect, a terminal device is provided. The terminal device is configured to perform the method in the above-mentioned first aspect.

In some embodiments, the terminal device includes a functional module configured to perform the method in the above-mentioned first aspect.

In a fourth aspect, a network device is provided. The network device is configured to perform the method in the above-mentioned second aspect.

In some embodiments, the network device includes a functional module configured to perform the method in the above-mentioned second aspect.

In a fifth aspect, a terminal device is provided. The terminal device includes a processor and a memory. The memory is configured to store a computer program. The processor is configured to invoke and execute the computer program stored in the memory to perform the method in the above-mentioned first aspect.

In a sixth aspect, a network device is provided. The network device includes a processor and a memory. The memory is configured to store a computer program. The processor is configured to invoke and execute the computer program stored in the memory to perform the method in the above-mentioned second aspect.

In a seventh aspect, a device is provided. The device is configured to implement the method in the above-mentioned first aspect or the above-mentioned second aspect.

In some embodiments, the device includes a processor configured to invoke and execute a computer program from a memory to cause an apparatus provided with the device to perform the method in the above-mentioned first aspect or the above-mentioned second aspect.

In an eighth aspect, a computer-readable storage medium is provided and configured to store a computer program. The computer program causes a computer to perform the method in the above-mentioned first aspect or the above-mentioned second aspect.

In a ninth aspect, a computer program product is provided. The computer program product includes computer program instructions. The computer program instructions cause a computer to perform the method in the above-mentioned first aspect or the above-mentioned second aspect.

In a tenth aspect, a computer program is provided. The computer program, when executed by a computer, causes the computer to perform the method in the above-mentioned first aspect or the above-mentioned second aspect.

With the above technical solutions, the one or more first downlink positioning signal sets are indicated by the network device by means of the first signaling, and the plurality of downlink positioning signals occupying different frequency domain resources included in each of the one or more first downlink positioning signal sets is used jointly to implement a positioning function. That is, the network device can configure positioning signals, on different carriers, that can be combined to optimize the positioning performance.

### BRIEF DESCRIPTION OF THE DRAWINGS

FIG. 1 is a schematic diagram of a communication system architecture where an embodiment of the present disclosure is applied.
FIG. 2 is a schematic diagram of a downlink-based positioning method according to an embodiment of the present disclosure.
FIG. 3 is a schematic diagram of an uplink-based positioning method according to an embodiment of the present disclosure.
FIG. 4 is a flowchart illustrating a wireless communication method according to an embodiment of the present disclosure.
FIG. 5 is a schematic diagram of two PRSs being contiguous and non-contiguous in a frequency domain according to an embodiment of the present disclosure.
FIG. 6 is a schematic diagram of two PRSs occupying different numbers of symbols in a slot according to an embodiment of the present disclosure.
FIG. 7 is a schematic diagram of a total equivalent bandwidth according to an embodiment of the present disclosure.
FIG. 8 is another schematic diagram of a total equivalent bandwidth according to an embodiment of the present disclosure.
FIG. 9 is a schematic diagram of offset information according to an embodiment of the present disclosure.
FIG. 10 is another schematic diagram of offset information according to an embodiment of the present disclosure.
FIG. 11 is yet another schematic diagram of offset information according to an embodiment of the present disclosure.
FIG. 12 is a schematic block diagram of a terminal device according to an embodiment of the present disclosure.
FIG. 13 is a schematic block diagram of a network device according to an embodiment of the present disclosure.
FIG. 14 is a schematic block diagram of a communication device according to an embodiment of the present disclosure.
FIG. 15 is a schematic block diagram of a device according to an embodiment of the present disclosure.
FIG. 16 is a schematic block diagram of a communication system according to an embodiment of the present disclosure.

### DETAILED DESCRIPTION

Technical solutions according to embodiments of the present disclosure will be described below in combination with accompanying drawings of the embodiments of the present disclosure. Obviously, the embodiments described below are only a part of the embodiments of the present disclosure, rather than all of the embodiments. On a basis of the embodiments in the present disclosure, all other embodiments obtained by a person skilled in the art without creative labor shall fall within the scope of the present disclosure.

The technical solutions according to the embodiments of the present disclosure can be applied to various communication systems, such as a Global System of Mobile (GSM) communication system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, an NR system, an evolution system of the NR system, an LTE-based access to unlicensed spectrum (LTE-U) system, an NR-based access to unlicensed spectrum (NR-U) system, a Non-Terrestrial Network (NTN), a Universal Mobile Telecommunication System (UMTS), a Wireless Local Area Network (WLAN), Wireless Fidelity (WiFi), a 5-th Generation Mobile Communication Technology (5G) system, or other communication systems, etc.

Generally speaking, conventional communication systems support a limited number of connections and are easy to implement. However, with the development of communication technologies, mobile communication systems will not only support conventional communication, but also will support, for example, Device to Device (D2D) communication, Machine to Machine (M2M) communication, Machine Type Communication (MTC), Vehicle to Vehicle (V2V) communication, Vehicle to everything (V2X) communication, etc. The embodiments of the present disclosure can also be applied to these communication systems.

Optionally, the communication system in the embodiments of the present disclosure may be applied to a Carrier Aggregation (CA) scenario, a Dual Connectivity (DC) scenario, or a Standalone (SA) network deployment scenario.

Optionally, a communication system according to the embodiments of the present disclosure can be applied to a non-licensed spectrum. The non-licensed spectrum can also be interpreted as a shared spectrum. Or, the communication system according to the embodiments of the present disclosure can be applied to a licensed spectrum. The licensed spectrum can also be interpreted as a non-shared spectrum.

The embodiments of the present disclosure are described in conjunction with a network device and a terminal device. The terminal device may also be referred to as User Equipment (UE), an access terminal, a user unit, a user station, a mobile station, a mobile platform, a remote station, a remote terminal, a mobile device, a user terminal, a terminal, a wireless communication device, a user agent, a user apparatus, etc.

The terminal device may be a STATION (ST) in a WLAN, a cellular phone, a cordless phone, a Session Initiation Protocol (SIP) phone, a Wireless Local Loop (WLL) station, a Personal Digital Assistant (PDA) device, a handheld device having a wireless communication function, a computing device or other processing devices connected to a wireless modem, a vehicle-mounted device, a wearable device, and a next-generation communication system, e.g., a terminal device in an NR network or a terminal device in a future-evolved Public Land Mobile Network (PLMN) network.

In the embodiments of the present disclosure, the terminal device may be deployed on land, including being deployed indoors or outdoors, being deployed in a handheld manner, being deployed in a wearable manner, or being deployed in a vehicle-mounted manner; or on water (such as a ship, etc.); or in the air (such as on an aircraft, balloon, satellite, etc.).

In the embodiments of the present disclosure, the terminal device may be a mobile phone, a tablet computer (Pad), a computer having a wireless transceiving function, a Virtual Reality (VR) terminal device, an Augmented Reality (AR) terminal device, a wireless terminal device in industrial control, a wireless terminal device in self driving, a wireless terminal device in remote medical treatment, a wireless terminal device in a smart grid, a wireless terminal device in transportation safety, a wireless terminal device in smart city, a wireless terminal device in smart home, etc.

By way of example but not limitation, in the embodiments of the present disclosure, the terminal device may also be a wearable device. The wearable device can also be called a wearable smart device, which is a general term for devices that are wearable and developed by applying wearable technology to intelligently design daily wears, such as glasses, gloves, watches, clothing, shoes, etc. A wearable device is a portable device that is worn directly on the body or integrated into a user's clothing or accessory. The wearable device is not only a hardware device, but also realizes powerful functions through software support, data interaction, and cloud interaction. In a broad sense, wearable smart devices include a fully-functioned, large-size device that can achieve all or partial functions without relying on a smart phone, e.g., a smart watch or a pair of smart glasses, and a device that only focuses on a certain type of application function and needs to cooperate with other devices such as a smartphone, e.g., various types of smart bracelets and smart jewelry that monitor physical signs.

In the embodiments of the present disclosure, the network device may be a device configured to communicate with a mobile device, such as an Access Point (AP) in a WLAN, a Base Transceiver Station (BTS) in a GSM or a CDMA, a base station such as NodeB (NB) in a WCDMA, a base station such as Evolutional Node B (eNB or eNodeB) in an LTE, a relay station or an access point, a vehicle-mounted device, a wearable device, a network device or a base station such as the next generation Node B (gNB) in an NR network, a network device in a future-evolved PLMN network, a network device in an NTN network, etc.

By way of example but not limitation, in the embodiments of the present disclosure, the network device may have a characteristic of mobility. For example, the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. Optionally, the network device may also be a base station located on land, water, etc.

In the embodiments of the present disclosure, the network device can provide services for a cell, a terminal device communicates with the network device through transmission resources (for example, frequency domain resources, or spectrum resources) used by the cell. The cell may be a cell corresponding to the network device (e.g., a base station), and the cell can belong to a macro base station, or belong to a base station corresponding to a small cell. Here, the small cell may include a metro cell, a micro cell, a pico cell, a femto cell, etc. These small cells have characteristics of small coverage and low transmit power, and are suitable for providing high-speed data transmission services.

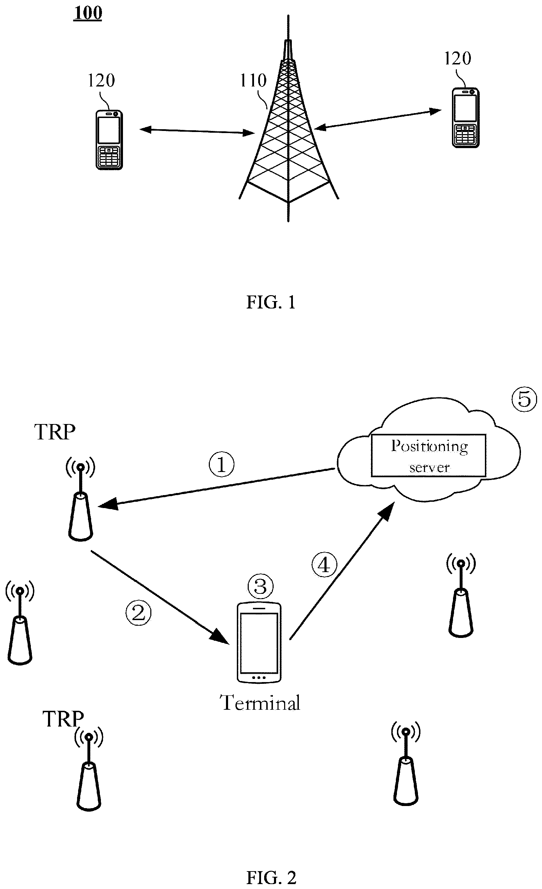

For example, a communication system 100 where the embodiments of the present disclosure are applied is illustrated in FIG. 1. The communication system 100 may include a network device 110. The network device 110 may be a device that communicates with a terminal device 120 (or referred to as a communication terminal, a terminal). The network device 110 may provide communication coverage for a specific geographical region and may communicate with a terminal device located in the region under coverage.

FIG. 1 exemplarily illustrates one network device and two terminal devices. Optionally, the communication system 100 may include a plurality of network devices, and each network device has coverage which may include another number of terminal devices. The embodiments of the present disclosure are not limited in this regard.

Optionally, the communication system 100 may further include other network entities such as a network controller and a mobility management entity. The embodiments of the present disclosure are not limited in this regard.

It should be understood that a device having a communication function in the network/system according to the embodiments of the present disclosure may be referred to as the communication device. Taking the communication system 100 illustrated in FIG. 1 as an example, the communication device may include the network device 110 and the terminal device 120 that have the communication function. The network device 110 and the terminal device 120 may be specific devices as described above, and details thereof will not be repeated herein. The communication device may further include other devices in the communication system 100, such as a network controller, a mobility management entity, and other network entities. The embodiments of the present disclosure are not limited in this regard.

It should be understood that terms "system" and "network" in the present disclosure are often used interchangeably herein. The term "and/or" in the present disclosure is only an association relationship describing associated objects, and means that there can be three kinds of relationships. For example, A and/or B can mean three situations: A exists alone, A and B exist at the same time, and B exists alone. In addition, the character "/" in the present disclosure generally represents that associated objects before and after the character "/" are in an "or" relationship.

Terms used in the embodiments of the present disclosure are intended to explain specific embodiments of the present disclosure only, rather than to limit the present disclosure. The terms "first", "second", "third", and "fourth" in the specification, claims, and accompanying drawings of the present disclosure are used to distinguish different objects, rather than to describe a specific sequence. In addition, terms "including" and "having" and any variations thereof are intended to cover non-exclusive inclusions.

It should be understood that references to "indicate" in the embodiments of the present disclosure may be a direct indication, an indirect indication, or a representation of an association relationship. For example, A indicates B may mean that A directly indicates B, e.g., B is obtainable through A; or that A indirectly indicates B, e.g., A indicates C, and B can be obtained through C; or that an association relationship exists between A and B.

In the description of the embodiments of the present disclosure, the term "correspond" may mean a direct or indirect correspondence between two objects involved, or may mean an association relationship between the two objects involved, or may mean a relationship of indicating and being indicated, configuring and being configured, etc.

In the embodiments of the present disclosure, "predefine" can be achieved by pre-storing, in a device (for example, including the terminal device and the network device), corresponding codes, a corresponding table, or contents in other methods that can be used to indicate relevant information. The present disclosure does not limit a specific implementation of "predefine". For example, "predefine" may refer to what defined in a protocol.

In the embodiments of the present disclosure, the "protocol" may refer to a standard protocol in the field of communication, which may include, for example, an LTE protocol, an NR protocols, and relevant protocols applied in a future communication system. The present disclosure is not limited to any of these examples.

For a better understanding of the embodiments of the present disclosure, NR positioning technologies related to the present disclosure are described.

The positioning technology is one of the core technologies of modern communication systems and navigation systems. For example, satellite navigation systems, Bluetooth, WiFi, etc., all provide positioning capabilities. Similarly, modern cellular communication systems also support a positioning function. Various advanced positioning technologies have gradually been introduced into cellular communication systems since 3G and 4G (LTE) systems. 5G (NR) systems will also support the positioning technology, a specific standard of which will be introduced in Release 16 (R16). NR in the version of 3rd Generation Partnership Project (3GPP) R16 introduces the following positioning technologies: Downlink Time Difference of Arrival (DL-TDOA) positioning method, Uplink Time Difference of Arrival (UL-TDOA) positioning method, Multi Round Trip Time (Multi-RTT) positioning method, Downlink Angle of Departure (DL-AoD) positioning method, Uplink Angle of Arrival (UL-AoA) positioning method, and an enhanced cell identifier (ID) positioning method.

To support the various positioning methods, the R16 NR introduces a PRS on a downlink and an SRS for positioning on an uplink.

An NR-based positioning function involves three main parties: a terminal (UE), a plurality of network Transmission/Reception Points (TRPs), and a positioning server (also referred to as a location server).

Each of the plurality of network TRPs can have the following characteristics: a plurality of TRPs around a terminal participates in cellular positioning; one base station may be one TRP; and one base station may have a plurality of subordinate TRPs.

The positioning server can have the following characteristics: the positioning server is responsible for an entire positioning process; and the positioning server often includes a Location Management Function (LMF) entity.

Downlink-based positioning methods can be divided into two main categories, namely a terminal-assisted (UE-assisted) positioning method and a UE-based positioning method.

In the terminal-assisted positioning method, a UE is responsible for a positioning-related measurement, and a network calculates position information based on a measurement reported by the UE.

In the UE-based positioning method, the UE performs a positioning-related measurement, and calculates position information based on a measurement result.

In the following, a basic procedure is described by taking an example of a downlink-based positioning method (the terminal-assisted or UE-assisted positioning method). As illustrated in FIG. 2, ①, the positioning server notifies a TRP of a relevant configuration, which may include configuration information of a PRS, and/or a type of a measurement result to be reported by a terminal, etc.; ②, the TRP transmits the positioning signal PRS; ③, the terminal receives the positioning signal PRS and performs a measurement; and it should be noted that the terminal requires different measurement results depending on different positioning methods; ④, the terminal feeds back the measurement result to the positioning server, e.g., the terminal feeds back the measurement result to the positioning server via a base station; and ⑤, the positioning server calculates position-related information.

The above is an illustration of the procedure of the UE-assisted positioning method. For the terminal-based (UE-based) positioning method, in the fourth step above, the terminal calculates the position-related information directly based on the measurement result, without reporting the measurement result to the positioning server for such a network element to calculate the position-related information. In the UE-based positioning method, the terminal needs to know position information corresponding to the TRP, so the network needs to inform the UE of the position information corresponding to the TRP in advance.

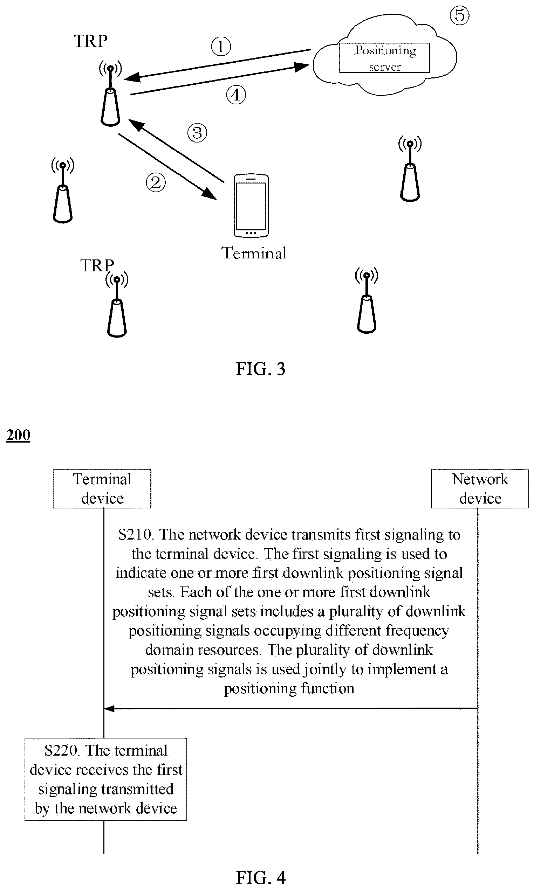

In the following, a basic procedure is described by taking an example of an uplink-based positioning method. As illustrated in FIG. 3, ①, the positioning server notifies a TRP of relevant configuration; ②, a base station transmits relevant signaling to a terminal; ③, the terminal transmits an SRS for positioning; ④, the TRP measures the SRS for positioning and transmits a measurement result to the positioning server; and ⑤, the positioning server calculates position-related information.

According to the basic principles of positioning, an increase in a bandwidth of a signal used for positioning can theoretically increase positioning accuracy. On the one hand, a maximum bandwidth of an NR carrier is limited. For example, the maximum bandwidth of the NR carrier is 100 MHz in a frequency range 1. On the other hand, the operator's spectrum is limited, and the spectrum of a single carrier may therefore fail to reach a maximum bandwidth supported by a protocol. Positioning signals on different carriers each can be measured independently. On the other hand, to further improve the positioning accuracy, one method is to jointly use signals used for positioning on different carriers.

Joint use, which may also be referred to as an aggregation processing, may be performed on positioning signals on different carriers: the positioning signals on different carriers are combined and seen as one signal having a larger bandwidth. That is, the signals are aggregated and measured as one "aggregated signal". The aggregation processing may also be referred to as an aggregation of NR positioning frequency layers, or an aggregation of DownLink (DL) positioning signals (PRSs), or an aggregation of DL PRS resources, or an aggregation of DL PRSs, or an aggregation of DL PRSs in one or more positioning frequency layers.

This method places relatively high demands on a time synchronization error and phase continuity on two carriers, and high demands on latency on a signal transmitting side and on a signal measurement side. Also, the terminal requires a higher sampling rate to implement the method for the aggregation processing.

Due to a high requirement on a product implementation posed by the method for the aggregation processing, configurations of relevant signals need to be optimized accordingly to facilitate the product implementation, so as to take advantage of the benefits of "aggregation" on the one hand and to reduce implementation complexity of the terminal on the other hand.

There are currently no configuration solutions available for the aggregation of signals for positioning. Imposing no restrictions on the configuration may lead to four possible problems: 1, high terminal implementation complexity; 2, high complexity for network optimization configurations; 3, a high configuration signaling overhead; and 4, poor performance.

Various methods in the disclosure focus on introducing one or more of the following conditions to solve one of the above problems or to simultaneously solve a plurality of the above problems, while providing specific configuration signaling designs.

The technical solutions of the present disclosure are detailed below with reference to specific embodiments.

FIG. 4 is a flowchart illustrating a wireless communication method 200 according to an embodiment of the present disclosure. As illustrated in FIG. 4, the method may include at least some of the following contents.

At S210, a network device transmits first signaling to a terminal device. The first signaling is used to indicate one or more first downlink positioning signal sets. Each of the one or more first downlink positioning signal sets includes a plurality of downlink positioning signals occupying different frequency domain resources. The plurality of downlink positioning signals is used jointly to implement a positioning function.

At S220, the terminal device receives the first signaling transmitted by the network device.

It should be noted that in the embodiments of the present disclosure, "jointly use" or "combine" can also be interpreted as "aggregation" or "bundling". In addition, in the embodiments of the present disclosure, for ease of description, a plurality of downlink positioning signals used to implement a positioning function based on joint use of the plurality of downlink positioning signals is referred to as a first downlink positioning signal set. That is, the concept of "set" in the first downlink positioning signal set referred to herein is introduced for ease of description only. The plurality of downlink positioning signals used jointly to implement the positioning function can be collectively referred to as a "set". Also, the expression "set" does not necessarily appear in a standard protocol or signaling.

In some embodiments, the first signaling may also be used to indicate one or more second downlink positioning signal sets each including only one downlink positioning signal. In this case, it is unnecessary to jointly use the downlink positioning signal in the second downlink positioning signal set as with the downlink positioning signals in the first downlink positioning signal set.

In the embodiments of the present disclosure, the terminal device may implement the positioning function realized based on the joint use of the plurality of downlink positioning signals, such as determination of position information, or a positioning-related measurement, or a positioning-related measurement and reporting of the measurement result, to improve the positioning accuracy.

In some embodiments, the downlink positioning signal can include a PRS and/or a Synchronization Signal Block (SSB). That is, the first downlink positioning signal set includes a plurality of PRSs, or the first downlink positioning signal set includes a plurality of SSBs, or the first downlink positioning signal set includes one or more PRSs and one or more SSBs.

It should be noted that SSB may also be referred to as Synchronization Signal/Physical Broadcast Channel block (SS/PBCH block).

In some embodiments, the first signaling may be transmitted according to an LTE positioning protocol. In this case, a procedure of an existing protocol is reused and the standardization takes a small amount of work.

In some embodiments, the network device may be a positioning server (location server). For example, when the first signaling is transmitted according to the LTE positioning protocol, the network device is the positioning server.

In some embodiments, when the first signaling is transmitted according to the LTE positioning protocol, the first signaling may be transmitted by means of at least one of the following signaling: *NR-Multi-RTT-ProvideAssistanceData*, *NR-DL-AoD-ProvideAssistanceData*, *NR-DL-TDOA-ProvideAssistanceData*, *NR-DL-PRS-AssistanceData*, or *NR-SelectedDL-PRS-IndexList.*

In some embodiments, the first signaling may be Radio Resource Control (RRC) signaling. That is, a configuration is provided directly to the terminal via the base station, which can reduce latency caused by transmission/processing of configuration information.

In some embodiments, the network device may be a serving base station of the terminal device. For example, when the first signaling is the RRC signaling, the network device is the serving base station of the terminal device.

In some embodiments, the first signaling can be used to indicate at least one TRP. Some or all of downlink positioning signals corresponding to TRPs in the at least one TRP belong to the one or more first downlink positioning signal sets. For example, some or all of downlink positioning signals corresponding to each TRP in the at least one TRP belong to the first downlink positioning signal set. Detailed description can be referred to the following Embodiment 1-0.

Since different TRPs support different transmitting bandwidth capacities, a configuration that indicates the joint use of downlink positioning signals on a per-TRP basis is applicable to more realistic network deployment scenarios, which increases a probability of usage of the joint use of downlink positioning signals.

### Embodiment 1-0

The first signaling indicates one or more TRPs. For example, the one or more TRPs may be indicated by indicating one or more downlink PRS identifiers (dl-PRS-IDs), in which each of different dl-PRS-IDs corresponds to a corresponding TRP. Optionally, the first signaling may contain a SEQUENCE data structure to indicate the one or more TRPs. Optionally, the SEQUENCE data structure may have a maximum size of 256, or a maximum size of 64, or a maximum size of 32, or a maximum size of 16. The maximum size of the SEQUENCE data structure is denoted as maxSize. Each element type in the SEQUENCE data structure is denoted as trpInfo. Optionally, each element indicates one piece of TRP information, which may range in value from 0 to 255, or from 0 to 63, or from 1 to 64. A corresponding newly-added field may be expressed as follows (specific names used are for illustrative purposes only and can be any other names):

### aggregationOfTRP SEQUENCE (SIZE (L.maxSize)) OF trpInfo, OPTIONAL.

The newly-added field in the above-mentioned Embodiment 1-0 may be transmitted in some NR positioning information element. The NR positioning information element may for example be *NR-Multi-RTT ProvideAssistanceData,* or *NR-DL-AoD-ProvideAssistanceData*, or *NR-DL-TDOA-ProvideAssistanceDat, or NR-DL-PRS-AssistanceDat,* or *NR-SelectedDL-PRS-IndexList.*

In this case, downlink positioning signals on Positioning Frequency Layers (PFLs) corresponding to each TRP indicated by "aggregationOfTRP" in the newly-added field can be aggregated or jointly used. For example, when "aggregationOfTRP" indicates one TRP (denoted as *TRP a*) and *TRP a* is configured with a positioning frequency layer 0 (PFL 0) and a positioning frequency layer 1 (PFL 1), signals on the PFL 0 and PFL 1 can be aggregated or jointly used. For example, when the first signaling indicates one TRP (denoted as *TRP a*), and *TRP a* is configured with the PFL 0 having downlink positioning signals x1 and x2 and the PFL 1 having downlink positioning signals x3 and x4, x1 and x2 may belong to one first downlink positioning signal set while x3 and x4 may belong to another first downlink positioning signal set, or x1, x2, x3, and x4 may all belong to a same first downlink positioned signal set.

In some embodiments, the first signaling can be used to indicate positioning frequency layers to which the some or all of downlink positioning signals corresponding to TRPs in the at least one TRP belonging to the one or more first downlink positioning signal sets belong. For example, the first signaling is used to indicate positioning frequency layers to which some or all of downlink positioning signals corresponding to each TRP in the at least one TRP belonging to the first downlink positioning signal set belong. Detailed description can be referred to the following Embodiment 1-0A and Embodiment 1-0D.

It should be noted that an aggregation or joint use of signals yields little gain when two positioning frequency layers are far apart in frequency domain. Thus, through an indication of the first signaling, positioning frequency layers suitable for the aggregation or joint use of downlink positioning signals can be flexibly combined to provide more space for network configuration optimization and to improve overall performance.

### Embodiment 1-0A

On the basis of the above-mentioned Embodiment 1-0, the first signaling can further indicate additional information. For example, for the indicated TRP, the first signaling further indicates signals on which positioning frequency layers can be aggregated. It is assumed that one TRP (denoted as *TRP a*) is configured with three positioning frequency layers (denoted as the PFL 0, PFL 1, and PFL 2). Optionally, when the first signaling indicates *TRP a* and aggregatable positioning frequency layers corresponding to *TRP a* are the FP0 and the PFL1, it is indicated that signals on the PFL 0 and PFL 1 configured on *TRP a* can be aggregated. Optionally, signals on the PFL 0 and PFL 2 are not aggregated, and signals on the PFL 1 and PFL 2 are not aggregated. That is, "trpInfo" in the newly-added field needs to contain both TRP indication information and positioning frequency layer indication information. The newly-added field in Embodiment 1-0A may be expressed as follows:

### aggregationOfTRP SEQUENCE (SIZE (L.maxSize)) OF trpInfo, OPTIONAL.

In Embodiment 1-0A, the positioning frequency layer indication information may include the following characteristics: the positioning frequency layer indication information may take a value of 0, 1, 2, 3 or take a value of 1, 2, 3, 4; the positioning frequency layer indication information takes a value of an integer (denoted as A1), which indicates that the positioning frequency layer 0 to a positioning frequency layer A1 can be aggregated, or indicates that the positioning frequency layer 1 to the positioning frequency layer A1 can be aggregated, or indicates that the positioning frequency layer 0 to a positioning frequency layer A1-1 can be aggregated; the positioning frequency layer indication information takes value(s) of one or more integers (each smaller than four, or smaller than or equal to four), each integer corresponding to one positioning frequency layer.

The positioning frequency layer indication information may be a bitmap, in which positioning frequency layers corresponding to bits having a value of 1 are aggregatable, or positioning frequency layers corresponding to bits having a value of 1 are aggregatable.

A value type of the positioning frequency layer indication information is denoted as data type 1 for ease of subsequent description.

### Embodiment 1-0D

On the basis of Embodiment 1-0, "trpInfo" in the newly-added field is one or more parameter sets (paraSet). paraSet contains the positioning frequency layer indication information, and/or positioning signal resource set indication information, and/or positioning signal resource indication information. For example, a reference configuration of trpInfo is as follows (each field of trpInfo and paraSet may or may not be optional, and trpInfo and paraSet each may contain all or some of the following fields):

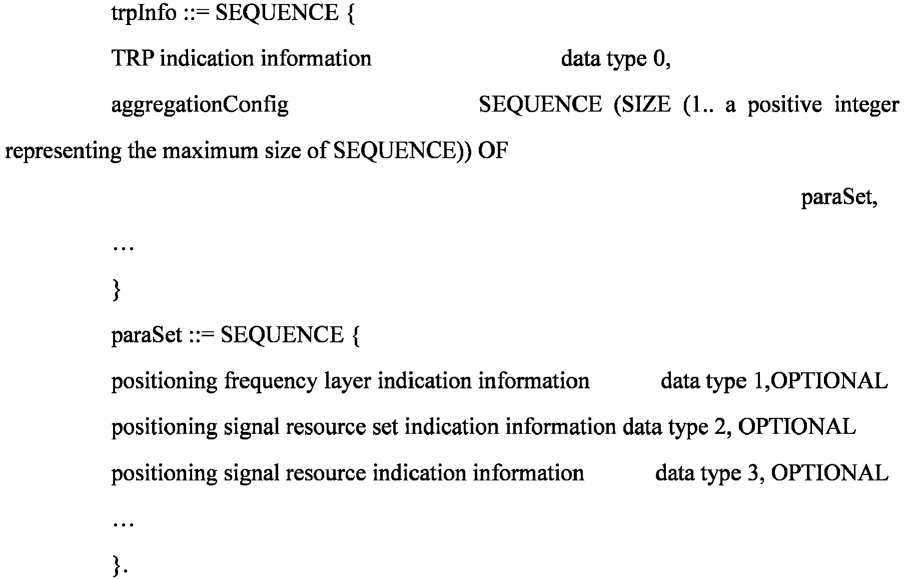

The newly-added field in the above-mentioned Embodiment 1-0D may be transmitted in some NR positioning information element. The NR positioning information element may for example be *NR-Multi-RTT ProvideAssistanceDat, or NR-DL-AoD-ProvideAssistanceData*, or *NR-DL-TDOA-ProvideAssistanceData*, or *NR-DL-PRS-AssistanceData*, or *NR-SelectedDL-PRS-IndexList.*

In some embodiments, the first signaling can be used to indicate a resource set index to which the some or all of downlink positioning signals corresponding to TRPs in the at least one TRP belonging to the one or more first downlink positioning signal sets belong. For example, the first signaling can be used to indicate a resource set index to which some or all of downlink positioning signals corresponding to each TRP in the at least one TRP belonging to the first downlink positioning signal set belong. Detailed description can be referred to the following Embodiment 1-0B and the above-mentioned Embodiment 1-0D.

This embodiment allows for a more refined aggregation or joint use of downlink positioning signals. For example, two resource sets are provided, one corresponding to a set of wide analogue beams and the other corresponding to a set of narrow analogue beams. The set of wide analogue beams is used for positioning in relatively coarse accuracy, and thus it is unnecessary to configure an aggregation of downlink positioning signals for the set of wide analogue beams. The set of narrow analogue beams is used for positioning in relatively fine accuracy, and thus an aggregation of downlink positioning signals needs to be configured for the set of narrow analogue beams. In this way, more freedom is provided to the network to optimize the downlink positioning signals, reducing an overhead of resources occupied by the positioning signals while improving systematization.

### Embodiment 1-0B

On the basis of the above-mentioned Embodiment 1-0 and/or Embodiment 1-0A, the first signaling can further indicate additional information. For example, for the indicated TRP, the first signaling further indicates signals in which resource set can be aggregated. It is assumed that one TRP (denoted as *TRP a*) is configured with three positioning frequency layers (denoted as a PFL 0, a PFL 1, and a PFL 2) each configured with two resource sets (denoted as a set 0 and a set 1). Several optional items are available below.

In combination with the above-mentioned Embodiment 1-0: when the first signaling indicates *TRP a,* and an aggregatable resource set corresponding to *TRP a* is the set 0, it is indicated that downlink positioning signals in resource sets 0 on the PFL 0, PFL 1, and PFL 2 on *TRP a* can be aggregated or jointly used. Optionally, no downlink positioning signals in resource sets 1 on the three positioning frequency layers can be aggregated or used jointly.

In combination with the above-mentioned Embodiment 1-0A: when the first signaling indicates *TRP a*, aggregatable positioning frequency layers corresponding to *TRP a* are the FP0 and PFL1, and a corresponding aggregatable resource set is the set 0, it is indicated that downlink positioning signals in resource sets 0 on the PFL 0 and PFL 1 on *TRP a* can be aggregated or jointly used. Optionally, no downlink positioning signals on the PFL 0 and PFL 2 can be aggregated or jointly used, and no downlink positioning signals on the PFL 1 and PFL 2 can be aggregated or jointly used, while no downlink positioning signals in resource sets 1 on the PFL 0 and PFL 1 on *TRP a* can be aggregated or jointly used.

The newly-added field in Embodiment 1-0B may be expressed as follows:

### aggregationOfTRP SEQUENCE (SIZE (1..maxSize)) OF trpInfo, OPTIONAL.

"trpInfo" in the newly-added field in Embodiment 1-0B needs to contain not only the TRP indication information, but also the positioning frequency layer indication information and/or positioning signal resource set indication information.

Optionally, the positioning frequency layer indication information in Embodiment 1-0B may include the following characteristics: the positioning frequency layer indication information may take a value of 0, 1, 2, 3, or take a value of 1, 2, 3, 4; the positioning frequency layer indication information takes a value of an integer (denoted as A1), which indicates that a positioning frequency layer 0 to a positioning frequency layer A1 can be aggregated, or indicates that a positioning frequency layer 1 to the positioning frequency layer A1 can be aggregated or jointly used, or indicates that the positioning frequency layer 0 to a positioning frequency layer A1-1 can be aggregated or jointly used; the positioning frequency layer indication information takes value(s) of one or more integers (each smaller than four, or smaller than or equal to four), each integer corresponding to one positioning frequency layer; the positioning frequency layer indication information may be a bitmap, in which positioning frequency layers corresponding to bits having a value of 1 are aggregatable, or positioning frequency layers corresponding to bits having a value of 1 are aggregatable; the positioning signal resource set indication information may take a value of 0, 1, or take a value of 1, 2; the positioning signal resource set indication information may take a value of an integer (denoted as A2), which indicates that a positioning signal resource set 0 to a positioning signal resource set A1 can be be aggregated or jointly used, or indicates that a positioning signal resource set 1 to the positioning signal resource set A1 can be aggregated or jointly used, or indicates that the positioning signal resource set 0 to a positioning signal resource set A1-1 can be aggregated or jointly used; the positioning signal resource set indication information takes one of two values (denoted as B1 and B2), with B1 indicating that the positioning signal resource set 0 can be aggregated or jointly used, and B2 indicating that both the positioning signal resource set 0 and the positioning signal resource set 1 can be aggregated or jointly used; the positioning signal resource set indication information takes one of three values (denoted as B1, B2, and B3), with B1 indicating that the positioning signal resource set 0 can be aggregated or jointly used, B2 indicating that both the positioning signal resource set 0 and the positioning signal resource set 1 can be aggregated or jointly used, and B3 indicating that the positioning signal resource set 1 can be aggregated or jointly used.

The positioning frequency layer indication information may be a bitmap, in which positioning frequency layers corresponding to bits having a value of 1 are aggregatable, or positioning frequency layers corresponding to bits having a value of 1 are aggregatable.

In some embodiments, the first signaling is used to indicate the some or all of downlink positioning signals corresponding to TRPs in the at least one TRP belonging to the one or more first downlink positioning signal sets. For example, the first signaling is used to indicate some or all of downlink positioning signals corresponding to each TRP in the at least one TRP belonging to the first downlink positioning signal set. Detailed description can be referred to the above-mentioned Embodiment 1-0D and the following Embodiment 1-0C.

This embodiment allows for a more refined aggregation of downlink positioning signals. For example, the aggregation may be performed based on different beams. That is, one resource may correspond to one analogue beam. An aggregation of downlink positioning signals may be configured on some analogue beams (e.g., an analogue beam aiming at a user) while no aggregation of downlink positioning signals may be configured on some other analogue beams (e.g., an analogue beam aiming in an opposite direction to the user, or in a direction at an angle with respect to the user). In this way, more freedom is provided to the network to optimize the downlink positioning signals, reducing the overhead of resources occupied by the positioning signals while guaranteeing the systematization.

### Embodiment 1-0C

On the basis of the above-mentioned Embodiment 1-0 and/or Embodiment 1-0A and/or Embodiment 1-0B, the first signaling can further indicate additional information. For example, for the indicated TRP, the first signaling further indicates signals in which resource set can be aggregated. It is assumed that one TRP (denoted as *TRP a*) is configured with three positioning frequency layers (denoted as a PFL 0, a PFL 1, and a PFL 2) each configured with two resource sets (denoted as a set 0 and a set 1), and four positioning signal resources (denoted as S0, S1, S2, and S3) are configured in each resource set. Several optional items are available below.

In combination with the above-mentioned Embodiment1-0: when first signaling indicates *TRP a,* and an aggregatable positioning signal resource corresponding to *TRP a* is S1, it is indicated that S1 signals on the PFL 0, PFL 1, and PFL2 on *TRP a* can be aggregated. Optionally, no other signals on the three positioning frequency layers can be aggregated.

In combination with the above-mentioned Embodiment 1-0A: when the first signaling indicates *TRP a*, aggregatable positioning frequency layers corresponding to *TRP a* are an FP0 and the PFL1, and a corresponding aggregatable positioning signal resource is S1, it is indicated that S1 signals on the PFL 0 and PFL 1 on *TRP a* can be aggregated. Optionally, no signals on the PFL 0 and PFL 2 can be aggregated, and no signals on the PFL 1 and PFL 2 can be aggregated, while no signals S0, S2, and S3 on the PFL 0 and PFL 1 on *TRP a* can be aggregated.

In combination with the above-mentioned Embodiment 1-0B: when the first signaling indicates *TRP a,* aggregatable positioning frequency layers corresponding to *TRP a* are the FP0 and PFL1, a corresponding aggregatable resource set is the set 0, and an aggregatable positioning signal resource is S1, it is indicated that signals S1 in resource sets 0 on the PFL 0 and PFL 1 on *TRP a* are aggregatable. Optionally, no signals on the PFL 0 and PFL 2 can be aggregated, no signals on the PFL 1 and PFL 2 can be aggregated, while no signals in resource sets 1 on the PFL 0 and PFL 1 on *TRP a* can be aggregated and no other signals (e.g., S0, S2, and S3) in resource sets 0 on the PFL 0 and PFL 1 on *TRP a* can be aggregated.

In combination with the above-mentioned Embodiment 1-0B: when the first signaling indicates *TRP a*, a corresponding aggregatable resource set is the set 0, and an aggregatable positioning signal resource is S1, it is indicated that signals S1 in resource sets 0 on the PFL 0, PFL 1, and PFL 2 on *TRP a* can be aggregated, no other signals (e.g., S0, S2, and S3) in the resource sets 0 on the PFL 0, PFL 1, and PFL 2 can be aggregated, and no signals in resource sets 1 on the PFL 0, PFL 1, and PFL2 can be aggregated.

The newly-added field in Embodiment 1-0C may be expressed as follows:

### aggregationOfTRP SEQUENCE (SIZE (L.maxSize)) OF trpInfo, OPTIONAL.

A reference configuration of trpInfo is as follows (each field may or may not be optional, OPTIONAL means an optional item, and trpInfo may contain all or some of the following fields).

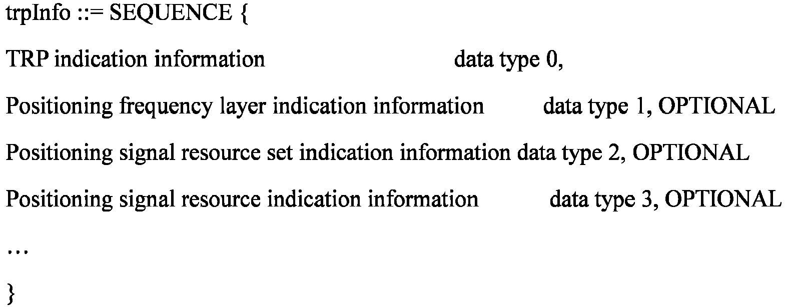

"trpInfo" in the newly-added field in Embodiment 1-0C needs to contain not only the TRP indication information, but also the positioning frequency layer indication information and/or positioning signal resource set indication information and/or positioning signal resource indication information.

Optionally, the positioning frequency layer indication information in Embodiment 1-0C may include the following characteristics: the positioning frequency layer indication information may take a value of 0, 1, 2, 3, or take a value of 1, 2, 3, 4; the positioning frequency layer indication information takes a value of an integer (denoted as A1), which indicates that a positioning frequency layer 0 to a positioning frequency layer A1 can be aggregated or jointly used, or indicates that a positioning frequency layer 1 to the positioning frequency layer A1 can be aggregated or jointly used, or indicates that the positioning frequency layer 0 to a positioning frequency layer A1-1 can be aggregated or jointly used; the positioning frequency layer indication information takes value(s) of one or more integers (each smaller than four, or smaller than or equal to four), each integer corresponding to one positioning frequency layer; the positioning signal resource set indication information may take a value of 0, 1, or take a value of 1, 2; the positioning signal resource set indication information may take a value of an integer (denoted as A2), which indicates that a positioning signal resource set 0 to a positioning signal resource set A1 can be aggregated or jointly used, or indicates that a positioning signal resource set 1 to the positioning signal resource set A1 can be aggregated or jointly used, or indicates that the positioning signal resource set 0 to a positioning signal resource set A1-1 can be aggregated or jointly used; the positioning signal resource set indication information takes one of two values (denoted as B1 and B2), with B1 indicating that the positioning signal resource set 0 can be aggregated or jointly used, and B2 indicating that both the positioning signal resource set 0 and the positioning signal resource set 1 can be aggregated or jointly used; the positioning signal resource set indication information takes one of three values (denoted as B1, B2, and B3), with B1 indicating that the positioning signal resource set 0 can be aggregated or jointly used, B2 indicating that both the positioning signal resource set 0 and the positioning signal resource set 1 can be aggregated or jointly used, and B3 indicating that the positioning signal resource set 1 can be aggregated or jointly used; the positioning signal resource indication information takes a value of an integer (denoted as A3), which indicates that a positioning signal resource 0 to a positioning signal resource A1 can be aggregated or jointly used, or indicates that a positioning signal resource 1 to the positioning signal resource A1 can be aggregated or jointly used, or indicates that the positioning signal resource 0 to a positioning signal resource A1-1 can be aggregated or jointly used; the positioning frequency layer indication information may be a bitmap, in which positioning frequency layers corresponding to bits having a value of 1 are aggregatable, or no positioning frequency layers corresponding to bits having a value of 1 are aggregatable.

In some embodiments, the plurality of downlink positioning signals included in the first downlink positioning signal set can satisfy one or more of the following conditions: the plurality of downlink positioning signals has a same subcarrier spacing; the plurality of downlink positioning signals has a same comb size; the plurality of downlink positioning signals corresponds to a same type of cyclic prefix; reference Resource Blocks (RBs) corresponding to the plurality of downlink positioning signals have a same absolute frequency domain position; the plurality of downlink positioning signals has a same periodicity; the plurality of downlink positioning signals has a same slot offset in one periodicity; the plurality of downlink positioning signals corresponds to a same repetition factor; the plurality of downlink positioning signals has a same bandwidth; the plurality of downlink positioning signals corresponds to a same time domain offset with respect to a System Frame Number 0 (SFN0) slot 0 of a reference cell; muting patterns 1 (Option-1 muting) corresponding to the plurality of downlink positioning signals have a same configuration; muting patterns 2 (Option-2 muting) corresponding to the plurality of downlink positioning signals have a same configuration; sequences corresponding to the plurality of downlink positioning signals have a same initial value; the sequences corresponding to the plurality of downlink positioning signals are obtained by using a same original sequence generation method, and by selecting different parts of an original sequence based on different frequency domain positions of the downlink positioning signals; the plurality of downlink positioning signals corresponds to a same Resource Element (RE) offset on a 1-st symbol; the plurality of downlink positioning signals corresponds to a same starting slot with respect to downlink positioning signal resource sets in which the plurality of downlink positioning signals is located; the plurality of downlink positioning signals corresponds to a same starting symbol of a slot; the plurality of downlink positioning signals has a same number of symbols; the plurality of downlink positioning signals corresponds to same quasi-colocation information; source reference signals in the quasi-colocation information corresponding to the plurality of downlink positioning signals are mutually quasi-co-located; the plurality of downlink positioning signals corresponds to a same quasi-colocation type; the plurality of downlink positioning signals corresponds to a same TRP; downlink positioning signal resource sets corresponding to the plurality of downlink positioning signals have a same identity; downlink positioning signal resources corresponding to the plurality of downlink positioning signals have a same identity; the plurality of downlink positioning signals is located in a same slot; the plurality of downlink positioning signals is located in a first time length, the first time length being in unit of one of symbol, slot, second, millisecond, microsecond, and nanosecond; the plurality of downlink positioning signals is aligned on symbols; symbols occupied by one of the plurality of downlink positioning signals which has a minimum number of symbols overlap others of the plurality of downlink positioning signals; the plurality of downlink positioning signals is contiguous in a frequency domain, or the plurality of downlink positioning signals occupies contiguous RBs in the frequency domain; a gap in the frequency domain between two of the plurality of downlink positioning signals that are adjacent to each other in the frequency domain is smaller than a first threshold value; and the plurality of downlink positioning signals is in a same measurement gap.

It should be noted that the above-mentioned conditions satisfied by the plurality of downlink positioning signals included in the first downlink positioning signal set may be combined arbitrarily without conflict. The embodiments of the present disclosure are not limited in this regard.

The introduction of additional limiting conditions on the plurality of downlink positioning signals included in the first downlink positioning signal set can reduce complexity of an implementation of the terminal and possibly processing complexity in transmission of the downlink positioning signals by the network, while maintaining the "joint use of downlink positioning signals".

In some embodiments, the plurality of downlink positioning signals included in the first downlink positioning signal set has the same subcarrier spacing. For example, the plurality of downlink positioning signals corresponds to a same *dl-PRS-SubcarrierSpacing* configuration, or corresponds to *dl-PRS-SubcarrierSpacing* configured with a same value.

It should be noted that the same subcarrier spacing for the plurality of downlink positioning signals can on the one hand reduce the processing complexity of the terminal, and on the other hand avoid the introduction of additional protection frequency bands due to simultaneous reception of different subcarrier spacings thereby saving system resources.

In some embodiments, the plurality of downlink positioning signals included in the first downlink positioning signal set has the same comb size. For example, the plurality of downlink positioning signals corresponds to a same *dl-PRS-CombSizeN* configuration, or corresponds to *dl-PRS-CombSizeN* configured with a same value.

It should be noted that the same comb size for the plurality of downlink positioning signals can reduce the processing complexity of the terminal, facilitate a filtering operation of a joint channel estimator on signals within a larger bandwidth, and improve measurement performance.

In some embodiments, the plurality of downlink positioning signals included in the first downlink positioning signal set corresponds to the same type of Cyclic Prefix (CP). For example, all of the plurality of downlink positioning signals correspond to a normal CP, or an extended CP. For example, the plurality of downlink positioning signals corresponds to a same *DL-PRS-CyclicPrefix* configuration, or corresponds to *DL-PRS-CyclicPrefix* configured with a same value.

It should be noted that the same type of cyclic prefix for the plurality of downlink positioning signals can prevent the terminal from using different Fast Fourier Transform (FFT) windows to process different signals, thereby reducing the processing complexity of the terminal.

In some embodiments, reference Resource Blocks (RBs) corresponding to the plurality of downlink positioning signals included in the first downlink positioning signal set have the same absolute frequency domain position. For example, the plurality of downlink positioning signals corresponds to a same *dl-PRS-PointA* configuration, or *dl-PRS-PointA* configured with a same value.

It should be noted that the same absolute frequency domain position of the reference RBs corresponding to the plurality of downlink positioning signals can reduce a signaling overhead and reduce the processing complexity of the terminal.

In some embodiments, the plurality of downlink positioning signals included in the first downlink positioning signal set has the same periodicity. For example, the plurality of downlink positioning signals corresponds to a same *dl-PRS-Periodicity-and-ResourceSetSlotOffset* configuration, or *dl-PRS-Periodicity-and-ResourceSetSlotOffset* configured with a same value.

It should be noted that the same periodicity for the plurality of downlink positioning signals can on the one hand reduce the processing complexity of the terminal, and on the other hand reduce the number of times of measurement gaps and improve overall system performance.

In some embodiments, the plurality of downlink positioning signals included in the first downlink positioning signal set has the same slot offset in one periodicity. For example, the plurality of downlink positioning signals corresponds to a same *dl-PRS-Periodicity-and-ResourceSetSlotOffset* configuration, or *dl-PRS-Periodicity-and-ResourceSetSlotOffset* configured with a same value.

It should be noted that the same slot offset in one periodicity for the plurality of downlink positioning signals can on the one hand reduce the processing complexity of the terminal, and on the other hand reduce the number of times of measurement gaps and improve the overall system performance.

In some embodiments, the plurality of downlink positioning signals included in the first downlink positioning signal set corresponds to the same repetition factor. For example, the plurality of downlink positioning signals corresponds to a same *dl-PRS-ResourceRepetitionFactor* configuration, or *dl-PRS-ResourceRepetitionFactor* configured with a same value.

It should be noted that when the plurality of downlink positioning signals corresponds to the same repetition factor, the terminal device can use a same time domain processing method to process the plurality of downlink positioning signals, which can avoid use of a plurality of different time domain processing methods, thereby reducing the processing complexity of the terminal.

In some embodiments, the plurality of downlink positioning signals included in the first downlink positioning signal set has the same bandwidth. For example, the plurality of downlink positioning signals corresponds to a same *dl-PRS-ResourceBandwidth* configuration, or *dl-PRS-ResourceBandwidth* having a same configuration.

It should be noted that the same bandwidth for the plurality of downlink positioning signals can reduce the processing complexity of the terminal.

In some embodiments, the plurality of downlink positioning signals included in the first downlink positioning signal set corresponds to the same time domain offset with respect to the SFN0 slot 0 of the reference cell (namely, the time offset of the SFN0 slot 0 for the transmitting cell with respect to SFN0 slot 0 of refrence cell). For example, the plurality of downlink positioning signals corresponds to a same *nr-DL-PRS-SFNO-Offset* configuration, or *nr-DL-PRS-SFNO-Offset* configured with a same value.

It should be noted that the plurality of downlink positioning signals corresponding to the same time domain offset with respect to the SFN0 slot 0 of the reference cell can prevent the terminal from performing different timing processings for different signals, which can effectively reduce the processing complexity of the terminal.

In some embodiments, the muting patterns 1 (Option-1 muting) corresponding to the plurality of downlink positioning signals included in the first downlink positioning signal set have the same configuration. For example, the plurality of downlink positioning signals corresponds to a same *dl-PRS-MutingOption1* configuration, or *dl-PRS-MutingOption1* configured with a same value.

It should be noted that the same Option-1 muting configuration corresponding to the plurality of downlink positioning signals can reduce the processing complexity of the terminal and complexity of the network configuration optimization.

In some embodiments, the muting patterns 2 (Option-2 muting) corresponding to the plurality of downlink positioning signals included in the first downlink positioning signal set have the same configuration. For example, the plurality of downlink positioning signals corresponds to a same *dl-PRS-MutingOption2* configuration, or *dl-PRS-MutingOption2* configured with a same value.

It should be noted that the same Option-2 muting configuration corresponding to the plurality of downlink positioning signals can reduce the processing complexity of the terminal and the complexity of the network configuration optimization.

In some embodiments, the sequences corresponding to the plurality of downlink positioning signals included in the first downlink positioning signal set have the same initial value. For example, the sequences correspond a same *dl-PRS-Sequenceld* configuration, or *dl-PRS-Sequenceld* configured with a same value.

It should be noted that the same initial value for the sequences corresponding to the plurality of downlink positioning signals can reduce the number of sequences and reduce the processing complexity of the terminal.

In some embodiments, the sequences corresponding to the plurality of downlink positioning signals included in the first downlink positioning signal set are obtained by using the same original sequence generation method, and by selecting the different parts of the original sequence based on the different frequency domain positions of the downlink positioning signals. For example, the plurality of downlink positioning signals corresponds to a same *dl-PRS-Sequenceld* configuration, or *dl-PRS-Sequenceld* configured with a same value.

It should be noted that obtaining the sequences corresponding to the plurality of downlink positioning signals by using the same original sequence generation method, and by selecting the different parts of the original sequence based on the different frequency domain positions of the downlink positioning signals can reduce the processing complexity of the terminal on the one hand. On the other hand, selecting the different parts from the same original sequence can improve randomness and autocorrelation characteristics of the sequences as a whole and increase the overall system performance.

In some embodiments, the plurality of downlink positioning signals included in the first downlink positioning signal set corresponds to the same RE offset on the 1-st symbol (namely, the starting RE offset of the first symbol within a DL PRS resource in frequency). For example, the plurality of downlink positioning signals corresponds to a same *dl-PRS-CombSizeN and ReOffset or dl-PRS-CombSizeN-AndReOffset* configuration, or *dl-PRS-CombSizeNand-Re Offset or dl-PRS-CombSizeN-AndReOffset* configured with a same value.

It should be noted that the same RE offset on the 1-st symbol corresponding to the plurality of downlink positioning signals can facilitate a filtering operation in a channel estimation, which can reduce the processing complexity of the terminal on the one hand and improve the measurement performance of the terminal on the other hand.

In some embodiments, the plurality of downlink positioning signals included in the first downlink positioning signal set corresponds to the same starting slot with respect to the downlink positioning signal resource sets in which the plurality of downlink positioning signals is located. For example, the plurality of downlink positioning signals corresponds to a same *dl-PRS-ResourceSlotOffset* configuration, or *dl-PRS-ResourceSlotOffset* having a same configuration.

It should be noted that the plurality of downlink positioning signals corresponding to the same starting slot with respect to the downlink positioning signal resource sets in which the plurality of downlink positioning signals is located can eliminate a need for the terminal to receive individual signals in a signal aggregation using different timings and reduce the processing complexity of the terminal.

In some embodiments, the plurality of downlink positioning signals included in the first downlink positioning signal set corresponds to the same starting symbol of the slot. For example, the plurality of downlink positioning signals corresponds to a same *dl-PRS-ResourceSlotOffset* configuration, or *dl-PRS-ResourceSymbolOffset* configured with a same value.

It should be noted that the plurality of downlink positioning signals corresponding to the same starting symbol of the slot can reduce the processing complexity of the terminal.

In some embodiments, the plurality of downlink positioning signals included in the first downlink positioning signal set has the same number of symbols (namely, the number of symbols of the DL PRS resource). For example, the plurality of downlink positioning signals corresponds to a same *dl-PRS-NumSymbols* configuration, or *dl-PRS-NumSymbols* configured with a same value.

It should be noted that when the plurality of downlink positioning signals has the same number of symbols, the terminal can use a same time domain processing method to process different signals in the signal aggregation, which can effectively reduce the processing complexity of the terminal.

In some embodiments, the plurality of downlink positioning signals included in the first downlink positioning signal set corresponds to the same quasi-colocation information (namely, quasi-colocation information of the DL PRS resource with other reference signals). For example, the plurality of downlink positioning signals corresponds to a same *dl-PRS-QCL-Info* configuration, or *dl-PRS-QCL-Info* configured with a same value.

It should be noted that when the plurality of downlink positioning signals corresponds to the same quasi-co-location information, the plurality of downlink positioning signals can be received using one antenna panel in a Frequency Range 2 (FR2) frequency band, which can reduce the processing complexity of the terminal. Otherwise, the terminal needs to use a number of panels to receive different signals simultaneously.

In some embodiments, the plurality of downlink positioning signals included in the first downlink positioning signal set corresponds to the same quasi-colocation type. For example, the quasi-colocation types of the plurality of downlink positioning signals are all typeC, or all typeD, or all both typeC and typeD.

It should be noted that when the plurality of downlink positioning signals corresponds to the same quasi-colocation type, the plurality of downlink positioning signals can be received in the FR2 frequency band using one antenna panel, which can reduce the processing complexity of the terminal. Otherwise, the terminal needs to use a number of panels to receive different signals simultaneously.

In some embodiments, the plurality of downlink positioning signals included in the first downlink positioning signal set corresponds to the same TRP. For example, the plurality of downlink positioning signals corresponds to a same *dl-PRS-ID* configuration, or *dl-PRS-ID* configured with a same value.

It should be noted that, since the signal aggregation imposes requirements of good time domain synchronization between different signals and good phase continuity in the frequency domain of the signals, it is difficult for different TRPs to meet the requirements. Therefore, the plurality of downlink positioning signals corresponding to the same TRP can reduce complexity of a network implementation on the one hand and improve the overall system performance on the other hand.

In some embodiments, the downlink positioning signal resource sets (namely, DL PRS resource set) corresponding to the plurality of downlink positioning signals included in the first downlink positioning signal set have the same identity. For example, the plurality of downlink positioning signals corresponds to a same *nr-DL-PRS-ResourceSetID* configuration, or *nr-DL-PRS-ResourceSetID* configured with a same value. Each downlink positioning signal set represents an identity of a downlink positioning signal set of a TRP (namely, the identity of a DL-PRS Resource Set of a TRP).

It should be noted that the same identity for the downlink positioning signal resource sets corresponding to the plurality of downlink positioning signals can on the one hand reduce the processing complexity of the terminal, and on the other hand define a correspondence between the signals by means of rules, which can reduce a signaling configuration overhead and improve the overall system performance.

In some embodiments, the downlink positioning signal resources corresponding to the plurality of downlink positioning signals included in the first downlink positioning signal set have the same identity (namely, DL PRS Resource ID). For example, the plurality of downlink positioning signals corresponds to a same *nr-DL-PRS-ResourceID* configuration, or *nr-DL-PRS-ResourceID* configured with a same value. The identity of each downlink positioning signal represents an identity of a downlink signal in a downlink signal set of a TRP (namely, the identity of a DL-PRS Resource of a DL-PRS Resource Set of a TRP).

It should be noted that the same identity for the downlink positioning signal resources corresponding to the plurality of downlink positioning signals can on the one hand reduce the processing complexity of the terminal, and on the other hand define the correspondence between the signals by means of rules, which can reduce the signaling configuration overhead and improve the overall system performance.

In some embodiments, the plurality of downlink positioning signals included in the first downlink positioning signal set is located in the same slot. On the one hand, the processing complexity of the terminal can be reduced; and on the other hand, measurement time of the terminal can be shortened to improve system resource utilization, thereby improving the overall performance.

In some embodiments, the plurality of downlink positioning signals included in the first downlink positioning signal set is located in the first time length, the first time length being in unit of symbol, slot, second, millisecond, microsecond, and nanosecond. Optionally, the first time length can be preconfigured or can be agreed upon in a protocol, or the first time length can be determined based on a terminal capability of the terminal device. On the one hand, the processing complexity of the terminal can be reduced; and on the other hand, the measurement time of the terminal can be shortened to improve the system resource utilization, thereby improving the overall performance.

In some embodiments, the plurality of downlink positioning signals included in the first downlink positioning signal set is aligned on symbols, i.e., occupies same symbols. On the one hand, the processing complexity of the terminal can be reduced; and on the other hand, the measurement time of the terminal can be shortened to improve the system resource utilization, thereby improving the overall performance.

In some embodiments, the symbols occupied by one of the plurality of downlink positioning signals included in the first downlink positioning signal set which has the minimum number of symbols overlap others of the plurality of downlink positioning signals included in the first downlink positioning signal set. On the one hand, the processing complexity of the terminal can be reduced; and on the other hand, the measurement time of the terminal can be shortened to improve the system resource utilization, thereby improving the overall performance.

In some embodiments, the plurality of downlink positioning signals included in the first downlink positioning signal set is contiguous in the frequency domain, or the plurality of downlink positioning signals included in the first downlink positioning signal set occupies the contiguous RBs in the frequency domain. It should be noted that reception performance of the signal aggregation can be affected when the plurality of downlink positioning signals has a large frequency domain gap. Therefore, an addition of such a constraint can ensure the overall performance.

In some embodiments, the gap in the frequency domain between the two of the plurality of downlink positioning signals included in the first downlink positioning signal set that are adjacent to each other in the frequency domain is smaller than the first threshold value. Optionally, the first threshold value can be preconfigured or can be agreed upon in a protocol, or the first threshold value can be determined based on a positioning signal bandwidth, or the first threshold value can be determined based on an operating frequency band (namely, NR operating band). It should be noted that the reception performance of the signal aggregation can be affected when the plurality of downlink positioning signals has a large frequency domain gap. Therefore, an addition of such a constraint can ensure the overall performance.

In some embodiments, the plurality of downlink positioning signals included in the first downlink positioning signal set is in the same measurement gap, which can reduce the number of measurement gaps required and improve the system resource utilization.

### Embodiment 1-1

It is assumed that the first downlink positioning signal set contains two downlink positioning signals. Cases where the first downlink positioning signal set contains more downlink positioning signals can be directly obtained by analogy. It is assumed that the terminal device receives the first signaling configured by the network device, and the first signaling is configured (e.g., according to the LTE Positioning Protocol (LPP) protocol) with two downlink positioning signal sets (the embodiments are described by taking PRS signals as an example) each containing four PRS signals. For example, the first set Set X contains PRS 0_0, PRS 0_1, PRS 0_2, and PRS 0_3, and the second set Set Y contains PRS 1_0, PRS 1_1, PRS 1_2, and PRS 1_3. The above two sets of signals correspond to four first downlink positioning signal sets. For example, {PRS 0_0, PRS 1_0} belongs to one first downlink positioning signal set, {PRS 0_1, PRS 1_1} belongs to one first downlink positioning signal set, {PRS 0_2, PRS 1_2} belongs to one first downlink positioning signal set, and {PRS 0_3, PRS 1_3} belongs to one first downlink positioning signal set.

It should be noted that it is unnecessary to configure the first downlink positioning signal set explicitly, since the first downlink positioning signal set is simply a logical concept introduced to facilitate description of two corresponding downlink positioning signals. For example, when two downlink positioning signals have a correspondence (e.g., the two downlink positioning signals can be used jointly, or aggregated together, or received in aggregation, or bundled together, etc.), the two downlink positioning signals are considered as belonging to the first downlink positioning signal set.

Optionally, in Embodiment 1-1, downlink positioning signals of the two downlink positioning signal sets may be downlink positioning signals on different positioning frequency layers. For example, downlink positioning signals in the zeroth set Set 0 are downlink positioning signals on a positioning frequency layer 0, and downlink positioning signals in the first set Set 1 are downlink positioning signal on a positioning frequency layer 1. Thus, the amount of work of a signaling design can be reduced by using an existing protocol configuration architecture and part of an existing design.

Optionally, in Embodiment 1-1, the downlink positioning signals in the two downlink positioning signal sets may be downlink positioning signals on a same positioning frequency layer. For example, the downlink positioning signals in both the zeroth set Set 0 and the first set Set 1 are downlink positioning signals on the positioning frequency layer 0. Thus, an introduction of a correspondence between positioning frequency layers can be avoided to reduce complexity of the signaling design. Also, with the downlink positioning signals on the same positioning frequency layer, a lot of configuration information can be reduced to lower the signaling overhead.

For the two downlink positioning signals in each first downlink positioning signal set (subsequent embodiments take {PRS 0_0, PRS 1_0} as an example, but the embodiments are also applicable to signals in other first downlink positioning signal sets), they occupy different resources in the frequency domain. For example, PRS 0_0 and PRS 1_0 occupy different Resource Elements (REs) that do not overlap in the frequency domain; or PRS 0_0 and PRS 1_0 occupy different RBs that do not overlap in the frequency domain.

Optionally, in Embodiment 1-1, PRS 0_0 and PRS 1_0 are in a same measurement gap. That is, at least one measurement of PRS 0_0 and PRS 1_0 can be made simultaneously by the terminal device during the a measurement gap length (see protocol TS38.133). Benefits of this restriction are manifold. 1. Measuring both PRS 0_0 and PRS 1_0 simultaneously by the terminal device in one measurement gap (i.e., within time specified by one measurement gap length) can eliminate a need for a measurement gap for each signal, reducing the number of measurement gaps. This restriction can improve the overall resource utilization of the system and increase an efficiency of the system since the terminal can stop processing other signals while performing a measurement during the measurement gap. 2. On the other hand, avoiding a long measurement gap in time between two signals can lower a demand for data storage (data of one signal is stored, until data of another signal is obtained so that an aggregation processing can be performed) and reduce terminal complexity.

Optionally, in Embodiment 1-1, a gap in time between PRS 0_0 and PRS 1_0 can be further defined as not only being smaller than the measurement gap length, but also within one slot. The main benefits are that a further reduction in the measurement gap in time between the two signals can lower the demand for the data storage (data of one signal is stored, until data of another signal is obtained so that the aggregation processing can be performed) and reduce the terminal complexity.

Optionally, in Embodiment 1-1, it is further possible to define that PRS 0_0 and PRS 1_0 occupy same symbol(s) in a same slot. The main benefits are that: in addition to the reduced terminal complexity as mentioned above, a better channel estimation can be obtained to improve measurement performance, since the terminal can directly perform a filtering processing on the same symbol(s) using a larger bandwidth.

Optionally, in Embodiment 1-1, PRS 0_0 and PRS 1_0 may correspond to a same number of symbols. For example, *dl-PRS-NumSymbols* corresponding to the two signals have equal values. The main benefit is that: since the same symbol(s) is occupied in the time domain, a same time domain filter can be used for interpolation in the time domain, thus improving channel estimation performance to increase measurement accuracy.

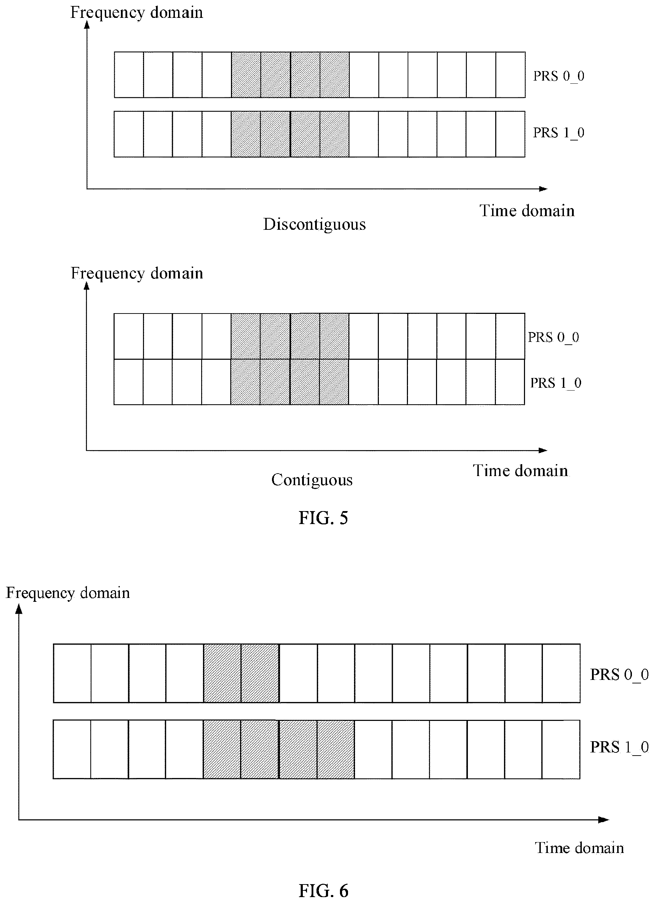

As an example, in FIG. 5, the two figures represent cases where PRS 0_0 and PRS 1_0 are contiguous and discontiguous in the frequency domain, respectively. In other subsequent embodiments, normally only one case is described for simplicity of description, and the other case can be directly obtained in a similar manner, details of which will be omitted. Within a slot, PRS 0_0 and PRS 1_0 each occupy same four symbols (as indicated by shadings in the figures). Optionally, PRS 0_0 and PRS 1_0 each occupy a same starting symbol. Optionally, PRS 0_0 and PRS 1_0 each occupy a same number of symbols. Optionally, PRS 0_0 and PRS 1_0 each occupy same symbol(s). Optionally, PRS 0_0 and PRS 1_0 are in a same slot.

As an example, in FIG. 6, within a slot, PRS 0_0 and PRS 1_0 occupy two symbols and four symbols, respectively (as indicated by shadings). Optionally, PRS 0_0 and PRS 1_0 each occupy a same starting symbol. Optionally, PRS 0_0 and PRS 1_0 are in a same slot. Optionally, symbols occupied by a downlink positioning signal (PRS 0_0) having a minimum number of symbols must overlap another downlink positioning signal (PRS 0_1).

Optionally, in Embodiment 1-1, PRS 0_0 and PRS 1_0 correspond to a same TRP. For example, *dl-PRS-ID* corresponding to the two signals have equal values. Since the signal aggregation imposes requirements of good time domain synchronization between different signals and good phase continuity in the frequency domain of the signals, it is difficult for different TRPs to meet the requirements. Therefore, PRS 0_0 and PRS 1_0 corresponding to the same TRP can reduce the complexity of the network implementation on the one hand and improve the overall system performance on the other hand.

Optionally, in Embodiment 1-1, downlink signal sets (e.g., DL PRS resource sets) corresponding to PRS 0_0 and PRS 1_0 have a same identity. That is, both the first set Set X and the second set Set Y correspond to a set identity of 0. Optionally, PRS 0_0 and PRS 1_0 have a same identity within their own set. For example, both PRS 0_0 and PRS 1_0 have a same downlink positioning signal resource identity of A in their own set. The two limitations have advantages that: through defining the correspondence between signals by means of rules, indicating the correspondence between PRS 0_0 and PRS 1_0 through explicit configuration signaling can be avoided, which can reduce an overhead of a configuration signal and improve the overall system performance. On the other hand, a processing of the terminal to parse the configuration information can be decreased to reduce the implementation complexity of the terminal.

It should be noted that other conditions satisfied by the plurality of downlink positioning signals included in the first downlink positioning signal set can be similarly described, and will not be enumerated.

In some embodiments, the plurality of downlink positioning signals included in the first downlink positioning signal set can belong to different positioning frequency layers. The amount of work of the signaling design can be reduced by using the existing protocol configuration architecture and part of the existing design.

It should be noted that the positioning frequency layer may also be referred to as a positioning layer.

Optionally, one or more downlink positioning signals corresponding to one positioning frequency layer can belong to one first downlink positioning signal set.

It is assumed that the terminal device receives the first signaling configured by the network device, and the first signaling is configured (e.g., according to the LTE Positioning Protocol (LPP) protocol) with two positioning frequency layers. Assuming that each positioning frequency layer has one downlink positioning signal set (one downlink positioning signal set is assumed for simplicity of the example), and a total of two downlink positioning signal sets exist (description is made by taking PRS signals as an example). Each of the two downlink positioning signal sets contains four PRS signals. For example, the first set Set X contains PRS 0_0, PRS 0_1, PRS 0_2, and PRS 0_3, and the second set Set Y contains PRS 1_0, PRS 1_1, PRS 1_2, and PRS 1_3. The above two sets of signals correspond to four first downlink positioning signal sets. For example, {PRS 0_0, PRS 1_0} belongs to one first downlink positioning signal set, {PRS 0_1, PRS 1_1} belongs to one first downlink positioning signal set, {PRS 0_2, PRS 1_2} belongs to one first downlink positioning signal set, and {PRS 0_3, PRS 1_3} belongs to one first downlink positioning signal set.

Optionally, the different positioning frequency layers are in a same operating frequency band (e.g., an NR operating band). Thus, it is possible to ensure that the plurality of downlink positioning signals in the aggregated signal is contiguous in the frequency domain or has a small gap, which can improve the measurement performance. On the other hand, it is possible to reduce the implementation complexity of the terminal, and eliminate the need to use different radio-frequency channels to receive signals in different frequency bands.

In some embodiments, a correspondence between the plurality of downlink positioning signals in the first downlink positioning signal set can be indicated or carried by one of the following signaling: *NR-Multi-RTT ProvideAssistanceData, NR-DL-AoD-ProvideAssistanceData*, *NR-DL-TDOA-ProvideAssistanceData*, *NR-DL-PRS-AssistanceData*, *NR-SelectedDL-PRS-IndexList*, and *NR-SelectedDL-PRS-IndexListPerFreq.*

In some embodiments, a correspondence between the plurality of downlink positioning signals included in the first downlink positioning signal set and positioning frequency layers can be indicated or carried by one of the following signaling: *NR-Multi-RTT-ProvideAssistanceData*, *NR-DL-AoD-ProvideAssistanceData*, *NR-DL-TDOA-ProvideAssistanceData*, *NR-DL-PRS-AssistanceData, NR-SelectedDL-PRS-IndexList,* and *NR-SelectedDL-PRS-IndexListPerFreq.*

### Embodiment 1-2

This is an example of a correspondence between a plurality of positioning frequency layers being transmitted via a positioning information element such as *NR-DL-PRS-AssistanceData.* In this embodiment, modifications are made to existing information elements in a bold font (the same applies in the following description unless specified otherwise). Specific names used are for illustrative purposes only and may be other names.

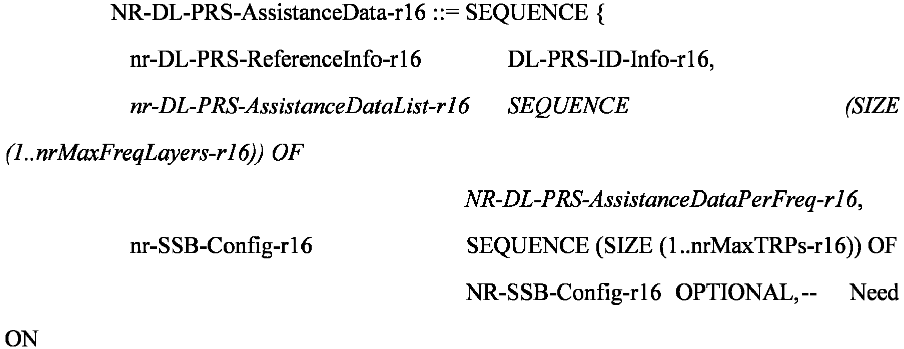

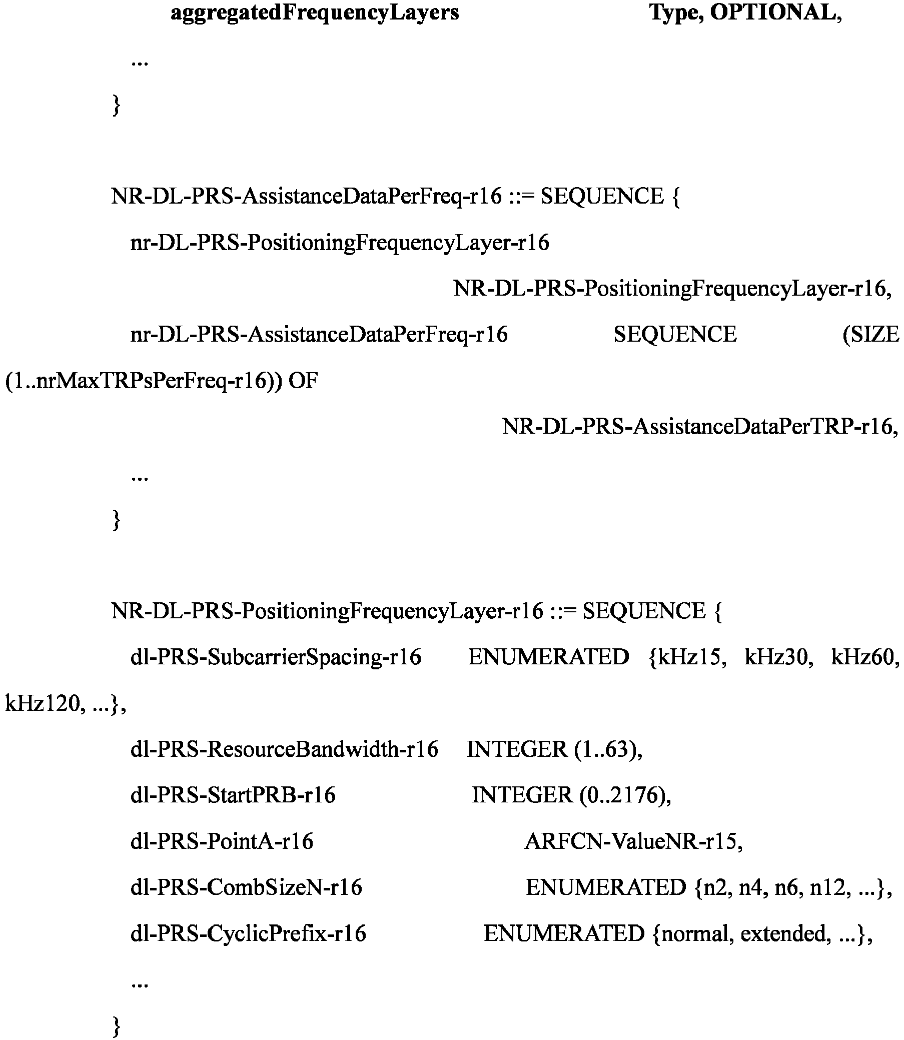

Optionally, the newly-added content in Embodiment 1-2 is an optional item.

Optionally, representation methods of the above-mentioned "aggregatedFrequencyLayers" and its corresponding value type may have different options (possibly one of the following two methods). It is assumed that *nr-DL-PRS-AssistanceDataList-r16* indicates signal configurations on four different positioning frequency layers (corresponding positioning frequency layers are denoted as a PFL 0, a PFL 1, a PFL 2, and a PFL 3).

Method 1: "aggregatedFrequencyLayers" corresponds to a plurality of positioning frequency layers. For example, aggregatedFrequencyLayers may take two values of 0 and 1, which indicate that corresponding PFL 0 and PFL 1 in the above-mentioned nr-DL-PRS-AssistanceDataList (in an italic font) correspond to each other. That is, corresponding signals on these two positioning frequency layers can be aggregated, or can be received in an aggregated manner. In this case, optionally, the type may be represented as follows: SEQUENCE (SIZE (nrMaxFreqLayers)) OF INTEGER (0... nrMaxFreqLayers-1), or SEQUENCE (SIZE (Z)) OF INTEGER (0... nrMaxFreqLayers-1), where Z is smaller than nrMaxFreqLayers, and nrMaxFreqLayers is a value specified in an existing protocol TS37.355 V16.2.0 (2020-09). This example has an advantage of more flexibility than the latter example. For example, it may be indicated that the PFL 2 corresponds to the PFL 3, or that the PFL 0 corresponds to the PFL 3. Or, for example, "aggregatedFrequencyLayers" takes a value of 2, which indicates that corresponding first two positioning frequency layers in the above-mentioned nr-DL-PRS-AssistanceDataList-r16 (in the italic font) correspond to each other. That is, the PFL 0 and PFL 1 correspond to each other. Corresponding signals on these two positioning frequency layers can be aggregated, or can be received in an aggregated manner. The advantage of this example over the previous example is that a bit overhead of signaling can be reduced. For another example, aggregatedFrequencyLayers may indicate a corresponding positioning frequency layer via a bitmap.

Method 2: "aggregatedFrequencyLayers" takes one or more sets of values. Each set of values corresponds to a plurality of positioning frequency layers. For example, "aggregatedFrequencyLayers" takes values of {0, 1} and {2,3}, which indicate that corresponding PFL 0 and PFL 1 in the above-mentioned nr-DL-PRS-AssistanceDataList-r16 (in the italic font) correspond to each other, and corresponding PFL 2 and PFL 3 in the above-mentioned nr-DL-PRS-AssistanceDataList-r16 (in the italic font) also correspond to each other. Corresponding signals on two corresponding positioning frequency layers can be aggregated, or can be received in an aggregated manner. Optionally, each set of values may be indicated via a bitmap. The solution of Method 2 is more flexible than the solution described in the above-mentioned Method 1. In Method 1, only one set of aggregatable positioning frequency layers can be indicated, while in Method 2, a plurality of sets of aggregatable positioning frequency layers can be indicated. For example, the PFL 0 and PFL 1 are in one NR operating frequency band, the PFL 2 and PFL 3 are in another NR operating frequency band, positioning frequency layers in a same frequency band can be aggregated, and those in different frequency bands cannot be aggregated. The solution of Method 2 can flexibly indicate this situation.

Examples of the correspondence between the plurality of positioning frequency layers being transmitted via other positioning information elements, e.g., NR-Multi-RTT-ProvideAssistanceData, or NR-DL-AoD-ProvideAssistanceDat, or NR-DL-TDOA-ProvideAssistanceData, or NR-SelectedDL-PRS-IndexList, or nr-SelectedDL-PRS-IndexListPerFreq, can be directly obtained by similar analogy, thus details of which will be omitted herein.

In some embodiments, the plurality of downlink positioning signals included in the first downlink positioning signal set belonging to the same positioning frequency layer can avoid an introduction of the correspondence between the positioning frequency layers, which reduces the complexity of the signaling design and lowers the signaling overhead.

In some embodiments, the first signaling can be transmitted by means of at least one of the following signaling: *NR-DL-PRS AssistanceDataPerFreq, NR-DL-PRS-AssistanceDataPerTRP, nr-DL-PRS-Info*, *NR-DL-PRS-ResourceSet,* or *NR-DL-PRS-Resource.*

In some embodiments, the first signaling includes frequency domain indication information. The frequency domain indication information is used to indicate frequency domain information of the plurality of downlink positioning signals included in the first downlink positioning signal set.

Optionally, the frequency domain indication information is used to indicate one or more of frequency domain starting positions of the plurality of downlink positioning signals, frequency domain offset information of the plurality of downlink positioning signals, and frequency domain bandwidths of the plurality of downlink positioning signals.

In some embodiments, one or more pieces of frequency domain indication information are introduced in *NR-DL-PRS-AssistanceDataPerFreq*, which indicate a plurality of downlink positioning signals in each first downlink positioning signal set. Downlink positioning signals in a same first downlink positioning signal set have identical parameters, except for a difference in an allocation of frequency domain position. Optionally, the frequency domain indication information is used to indicate the frequency domain offset information of the plurality of downlink positioning signals. For example, reference can be made to Embodiment 1-3.

In some embodiments, one or more pieces of downlink positioning signal bandwidth information are introduced in *NR-DL-PRS-AssistanceDataPerFreq.* For example, reference can be made to Embodiment 1-4, Embodiment 1-4A, and Embodiment 1-4B.

In some embodiments, one or more pieces of frequency domain offset information are introduced in *NR-DL-PRS AssistanceDataPerTRP* to obtain the plurality of downlink positioning signals in each first downlink positioning signal set. Downlink positioning signals in a same first downlink positioning signal set have identical parameters, except for a difference in an allocation of frequency domain position. For example, reference can be made to Embodiment 1-6. Since different TRPs support different transmitting bandwidth capacities, a configuration of describing a signal aggregation on a per-TRP basis is applicable to more realistic network deployment scenarios, which increases a probability of usage of an aggregation of downlink positioning signals.

In some embodiments, one or more pieces of downlink positioning signal bandwidth information are introduced in *NR-DL-PRS-AssistanceDataPerTRP.* For example, reference can be made to Embodiment 1-7.

In some embodiments, one or more pieces of frequency domain offset information are introduced in *nr-DL-PRS-Info* to obtain the plurality of downlink positioning signals in each first downlink positioning signal set. Downlink positioning signals in a same first downlink positioning signal set have identical parameters, except for a difference in an allocation of frequency domain position. For example, reference can be made to Embodiment 1-9.

In some embodiments, one or more pieces of downlink positioning signal bandwidth information are introduced in *nr-DL-PRS-Info.* For example, reference can be made to Embodiment 1-10.

In some embodiments, the plurality of downlink positioning signals in the first downlink positioning signal set is indicated by *NR-DL-PRS-ResourceSet.* A more refined aggregation of downlink positioning signals can be achieved. For example, two sets are provided, one corresponding to a set of wide analogue beams and the other corresponding to a set of narrow analogue beams. The set of wide analogue beams is used for positioning in relatively coarse accuracy, and thus it is unnecessary to configure an aggregation of downlink positioning signals for the set of wide analogue beams. The set of narrow analogue beams is used for positioning in relatively fine accuracy, and thus an aggregation of downlink positioning signals needs to be configured for the set of narrow analogue beams. In this way, more freedom is provided to the network to optimize the downlink positioning signals, reducing the overhead of resources occupied by the positioning signals while improving the systematization.

In some embodiments, one or more pieces of frequency domain offset information are introduced in *NR-DL-PRS-ResourceSet* to obtain the plurality of downlink positioning signals in each first downlink positioning signal set. Downlink positioning signals in a same first downlink positioning signal set have identical parameters, except for a difference in an allocation of frequency domain position. For example, reference can be made to Embodiment 1-12.

In some embodiments, one or more pieces of downlink positioning signal bandwidth information are introduced in *NR-DL-PRS-ResourceSet.* For example, reference can be made to Embodiment 1-13.

In some embodiments, the plurality of downlink positioning signals in the first downlink positioning signal set is indicated by *NR-DL-PRS-Resource.* A more refined aggregation of downlink positioning signals can be achieved. For example, the aggregation may be performed based on different beams. That is, one resource may correspond to one analogue beam. An aggregation of downlink positioning signals may be configured on some analogue beams while no aggregation of downlink positioning signals may be configured on some other analogue beams. In this way, more freedom is provided to the network to optimize the downlink positioning signals, reducing the overhead of resources occupied by the positioning signals while guaranteeing the systematization.

In some embodiments, one or more pieces of frequency domain offset information are introduced in *NR-DL-PRS-Resource* to obtain the plurality of downlink positioning signals in each first downlink positioning signal set. Downlink positioning signals in a same first downlink positioning signal set have identical parameters, except for a difference in an allocation of frequency domain position. For example, reference can be made to Embodiment 1-15.

In some embodiments, one or more pieces of downlink positioning signal bandwidth information are introduced in *NR-DL-PRS-Resource.* For example, reference can be made to Embodiment 1-16.

In some embodiments, the frequency domain offset information is used to indicate a frequency domain gap between different downlink positioning signals. For example, reference can be made to Embodiment 1-20.

In some embodiments, the frequency domain offset information is used to indicate a frequency domain gap between a downlink positioning signal other than a 1-st downlink positioning signal of the plurality of downlink positioning signals and the 1-st downlink positioning signal. For example, reference can be made to Embodiment 1-21.

In some embodiments, the frequency domain offset information is used to indicate a frequency domain gap between two adjacent starting positions of the plurality of downlink positioning signals. For example, reference can be made to Embodiment 1-22.

In some embodiments, downlink positioning signals corresponding to one or more TRPs are indicated in the first signaling.

For example, downlink positioning signals corresponding to one or more current TRPs are indicated in *NR-DL-PRS-AssistanceDataPerFreq.* Reference can be made to Embodiment 1-5.

For example, downlink positioning signals corresponding to one or more current TRPs are indicated in *NR-DL-PRS-AssistanceDataPerTRP.* Reference can be made to Embodiment 1-8.

For example, downlink positioning signals corresponding to one or more current TRPs are indicated in *nr-DL-PRS-Info.* Reference can be made to Embodiment 1-11.

For example, downlink positioning signals corresponding to one or more current TRPs are indicated in *NR-DL-PRS-ResourceSet.* Reference can be made to Embodiment 1-14.

For example, downlink positioning signals corresponding to one or more current TRPs are indicated in *NR-DL-PRS-Resource.* Reference can be made to Embodiment 1-17.

### Embodiment 1-3

One or more pieces of frequency domain offset information are introduced in the positioning information element *NR-DL-PRS AssistanceDataPerFreq,* which indicate the plurality of downlink positioning signals in each first downlink positioning signal set. Modifications are made to existing information elements in a bold font (the same applies in the following description unless specified otherwise). Specific names used are for illustrative purposes only and may be other names.

Optionally, as Example 1 of Embodiment 1-3: one or more pieces of frequency domain offset information are directly introduced below *NR-DL-PRS-AssistanceDataPerFreq.*

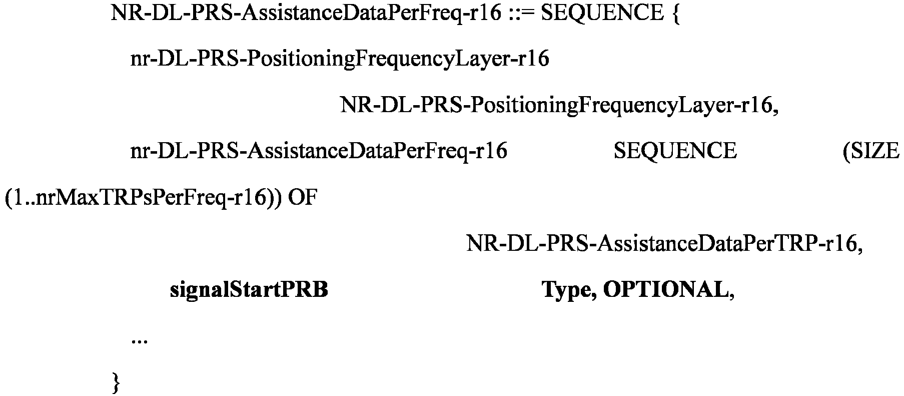

Optionally, the newly-added content is an optional option.

Optionally, representation methods of the above-mentioned "signalStartPRB" and its corresponding value type Type may have different options (possibly one of the following options).

"signalStartPRB" corresponds to one number (i.e., only one value can be taken; optionally, e.g., the Type may be INTEGER (O..xx), where xx represents an upper limit of value), which indicates a frequency domain starting position of one aggregated signal (denoted as J for ease of description) corresponding to signals (denoted as G for ease of description) on an existing positioning frequency layer (namely, the start PRB index defined as offset with respect to reference DL-PRS Point A for the Positioning Frequency Layer).

"signalStartPRB" may correspond to one or more numbers (i.e., a plurality of values may be taken; optionally, e.g., the Type may be SEQUENCE (SIZE (YY)) OF INTEGER (O..xx), where YY represents up to YY numbers are indicated and xx represents an upper limit of value of each number), which indicates frequency domain starting positions of a plurality of aggregated signals (denoted as J and K for ease of description, assuming that the plurality of aggregated signals represents two aggregated signals) corresponding to signals (denoted as G for ease of description) on an existing positioning frequency layer (namely, the start PRB index defined as offset with respect to reference DL-PRS Point A for the positioning Frequency Layer).

Specific meanings of numbers mentioned above can be explained in different embodiments. Reference can be made to Embodiment 1-20, Embodiment 1-21, and Embodiment 1-22 in the present disclosure.

Other parameters of the signal J, the signal K, and the signal G may be the same, e.g., a same bandwidth, a same comb size, or a same number of occupied symbols. The bandwidth may or may not be the same (referring to Embodiment 3-4).

Optionally, as Example 2 of Embodiment 1-3: one or more pieces of frequency domain offset information are introduced via *NR-DL-PRS-PositioningFrequencyLayer* below *NR-DL-PRS-AssistanceDataPerFreq.*

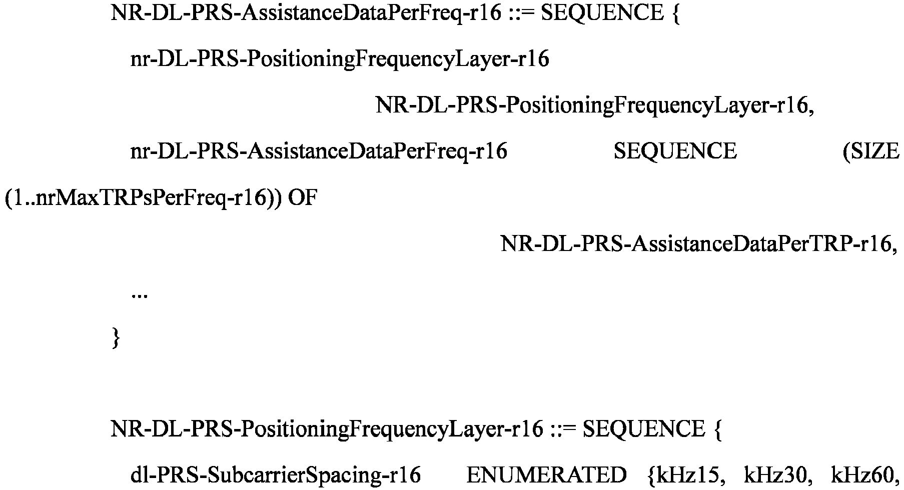

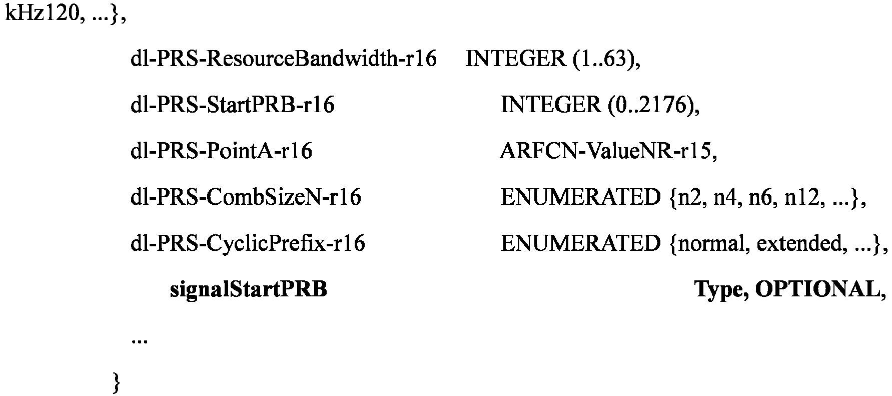

Reference for representation methods of the above-mentioned "signalStartPRB" and its corresponding value type Type can be made to Example 1 of Embodiment 1-3.

### Embodiment 1-4

One or more pieces of downlink positioning signal bandwidth information are newly introduced in the positioning information element *NR-DL-PRS-AssistanceDataPerFreq*, which indicate a plurality of downlink positioning signal bandwidths in each first downlink positioning signal set.

Optionally, as Example 1 of Embodiment 1-4: one or more pieces of downlink positioning signal bandwidth information are directly introduced below *NR-DL-PRS-AssistanceDataPerFreq.*

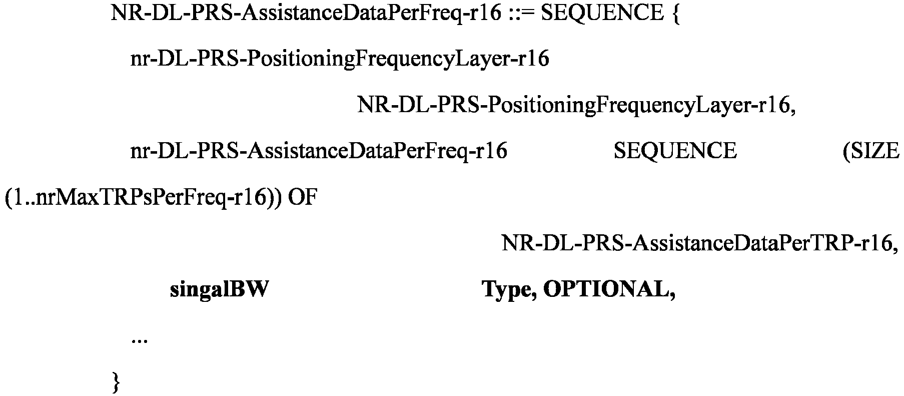

Optionally, the newly-added content is an optional option.

Optionally, representation methods of the above-mentioned "singalBW" and its corresponding value type Type may have different options (possibly one of the following options).

"singalBW" corresponds to one number (i.e., only one value can be taken; optionally, e.g., the Type may be INTEGER (O..xx), where xx represents an upper limit of value), which indicates a bandwidth of one aggregated signal (denoted as J for ease of description) corresponding to positioning signals (denoted as G for ease of description, and already configurable in version TS37.355) on an existing positioning frequency layer.

"singalBW" may correspond to one or more numbers (i.e., a plurality of values may be taken; optionally, e.g., the Type may be SEQUENCE (SIZE (YY)) OF INTEGER (O..xx), where YY represents up to YY numbers are indicated and xx represents an upper limit of value of each number), which indicates a bandwidth of each of a plurality of aggregated signals (denoted as J and K for ease of description, assuming that the plurality of aggregated signals represents two aggregated signals) corresponding to signals (denoted as G for ease of description, and already configurable in current version TS37.355) on an existing positioning frequency layer.

Other parameters of the signal J, the signal K, and the signal G may be the same, e.g., a same comb size, or a same number of occupied symbols. J, K, and G are contiguous in the frequency domain. For example, positions of G, J, and K in the frequency domain are in an ascending or descending order. This approach can avoid the need to configure frequency domain starting positions of different signals (e.g., J and K), thereby reducing the signaling overhead.

Optionally, as Example 2 of Embodiment 1-4: one or more pieces of downlink positioning signal bandwidth information are introduced via *NR-DL-PRS-PositioningFrequencyLayer* below *NR-DL-PRS-AssistanceDataPerFreq.*

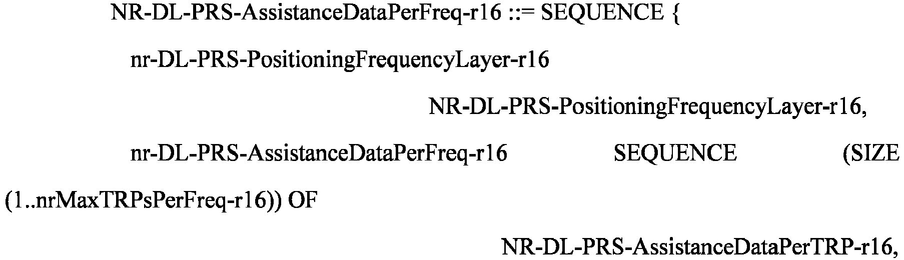

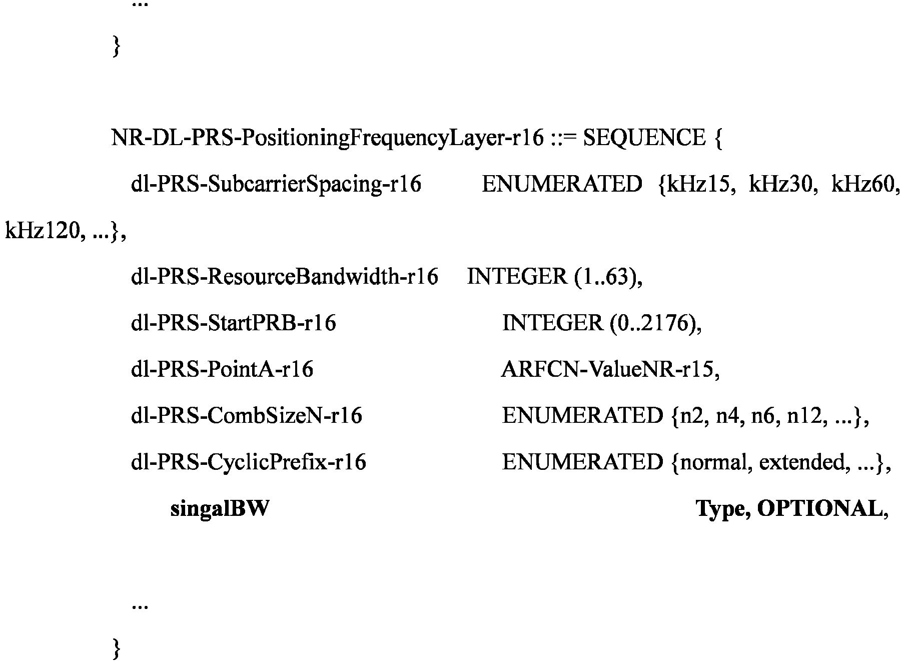

Reference to representation methods of the above-mentioned "signalStartPRB" and its corresponding value type Type can be made to Example 1 of Embodiment 1-4.

### Embodiment 1-4A

Embodiment 1-4 and Embodiment 1-3 can be combined. That is, frequency domain starting positions of different signals and corresponding frequency bandwidths are indicated simultaneously. Since the combination is straightforward, only schematic description is provided. For example, the following two information fields are added to *NR-DL-PRS-PositioningFrequencyLayer* below *NR-DL-PRS-AssistanceDataPerFreq* or *NR-DL-PRS-AssistanceDataPerFreq,* possible meanings of which are explained in Embodiment 1-3 and Embodiment 1-4.

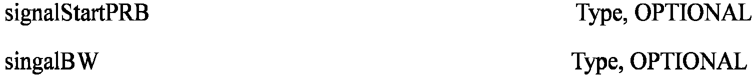

### Embodiment 1-4B

Another way in which Embodiment 1-4 and Embodiment 1-3 can be combined is to use one field for a representation. For example, a new field is added to *NR-DL-PRS-PositioningFrequencyLayer* below *NR-DL-PRS-AssistanceDataPerFreq* or *NR-DL-PRS-AssistanceDataPerFreq*, e.g.: 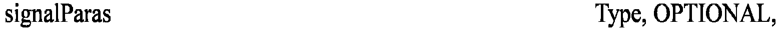 where each of "signalParas" and "Type" can indicate one or more sets of signal parameters. Each set of signal parameters at least contains two pieces of indication information, one of which indicates a frequency domain starting position of a signal and the other of which indicates a signal bandwidth.

### Embodiment 1-5

Signals on a plurality of current frequency layer are indicated in the positioning information element *NR-DL-PRS-AssistanceDataPerFreq.* The following is an example of two signals (since one is already configured in the existing protocol, a new one, shown in the bold font, is added. To add more signals, more lines similar to the content in the bold font can be added):

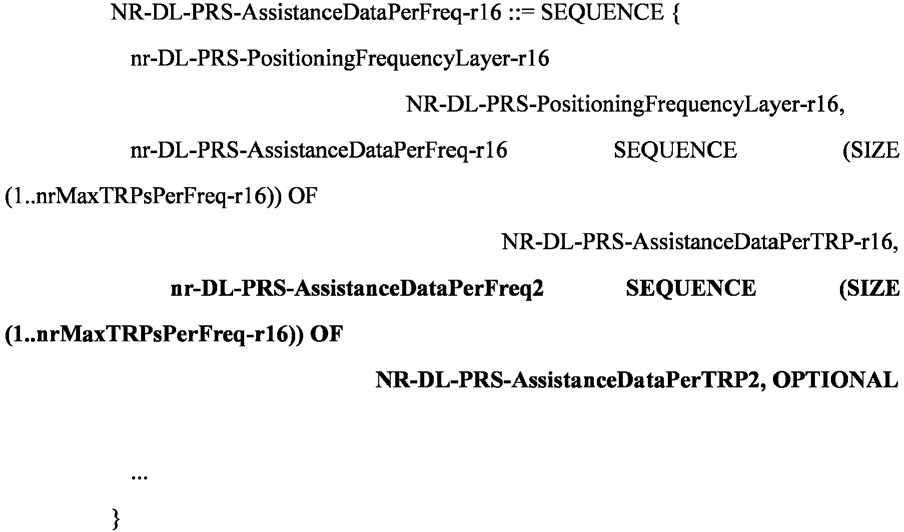

Here, "nr-DL-PRS-AssistanceDataPerFreq2" represents a new signal, and different options can be provided for "NR-DL-PRS-AssistanceDataPerTRP2".

When Embodiment 1-5 is combined with Embodiment 1-3, NR-DL-PRS-AssistanceDataPerTRP2 may be identical to existing NR-DL-PRS-AssistanceDataPerTRP-r16 or contain some of the parameters in NR-DL-PRS-AssistanceDataPerTRP-r16.

Optionally, NR-DL-PRS-AssistanceDataPerTRP2 may contain all or some of the parameters in NR-DL-PRS-AssistanceDataPerTRP-r16, and frequency domain-related indication information used to indicate a frequency domain starting position of a signal.

### Embodiment 1-6

Embodiment 1-6 corresponds to Embodiment 1-3, except that the modification in the bold font is applied in NR-DL-PRS-AssistanceDataPerTRP. Description of the newly-added field is similar to that of Embodiment 1-3.

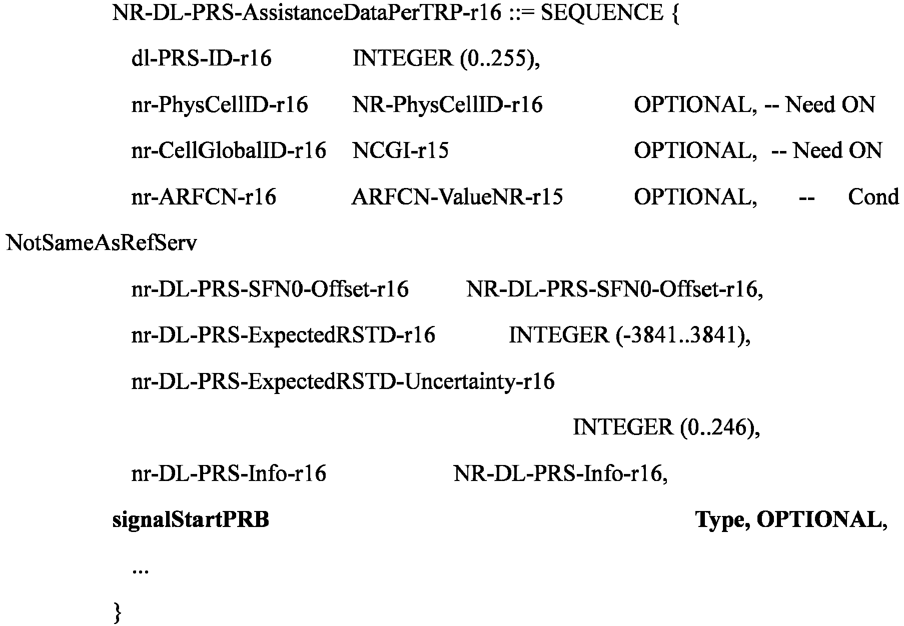

### Embodiment 1-7

Embodiment 1-7 corresponds to Embodiment 1-4, except that the modification in the bold font is applied in NR-DL-PRS-AssistanceDataPerTRP. Description of the newly-added field is similar to that of Embodiment 1-4.

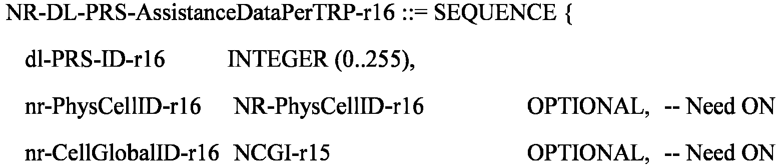

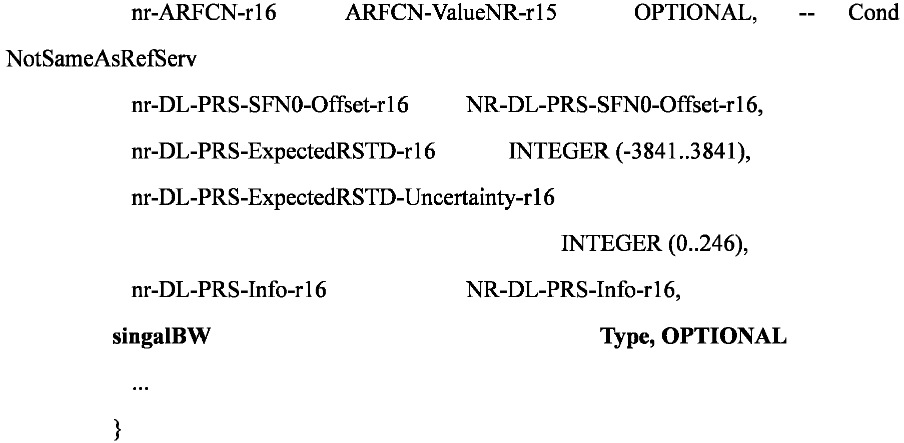

Similar to Embodiment 1-4A and Embodiment 1-4B, Embodiment 1-7A and Embodiment 1-7B can be obtained (i.e., a combination of Embodiment 1-7 and Embodiment 1-6).

### Embodiment 1-8

Downlink positioning signals corresponding to one or more current TRPs are indicated in NR-DL-PRS-AssistanceDataPerTRP.

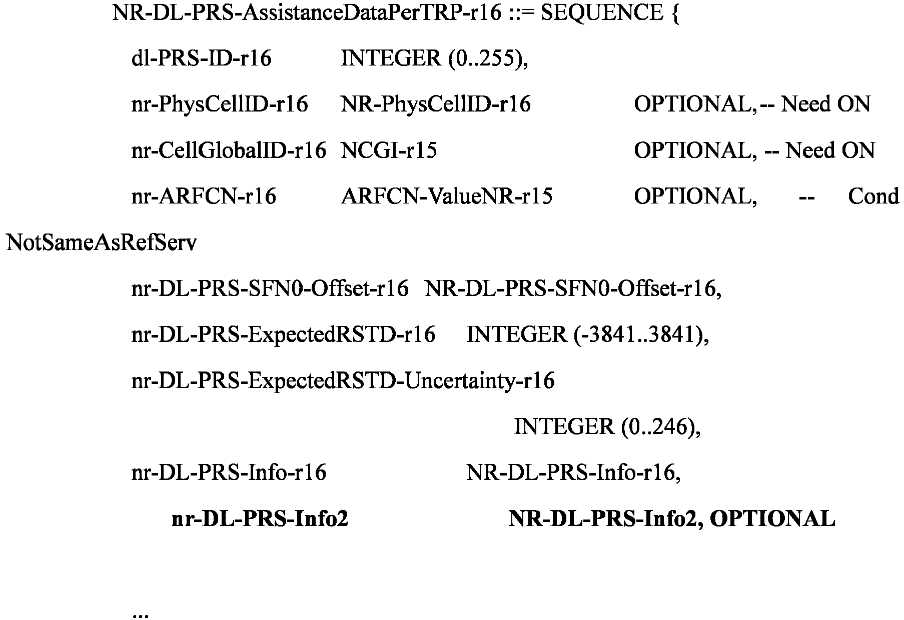

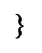

Here, "nr-DL-PRS-Info2" represents a new downlink positioning signal and different options can be provided for "NR-DL-PRS-Info2".

When Embodiment 1-8 is combined with Embodiment 1-6, NR-DL-PRS-Info2 may be identical to existing NR-DL-PRS-Info-r16 or contain some of the parameters in NR-DL-PRS-Info-r16.

NR-DL-PRS-Info2 may contain all or some of the parameters in NR-DL-PRS-Info-r16, and frequency domain-related indication information used to indicate a frequency domain starting position of a signal.

### Embodiment 1-9

Embodiment 1-9 corresponds to Embodiment 1-3, except that the modification in the bold font is applied in nr-DL-PRS-Info. Description of the newly-added field is similar to that of Embodiment 1-3.

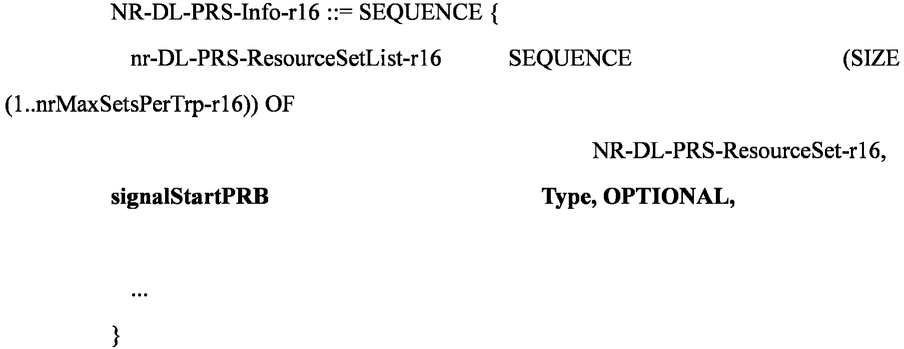

### Embodiment 1-10

Embodiment 1-10 corresponds to Embodiment 1-4, except that the modification in the bold font is applied in nr-DL-PRS-Info. Description of the newly-added field is similar to that of Embodiment 1-4.

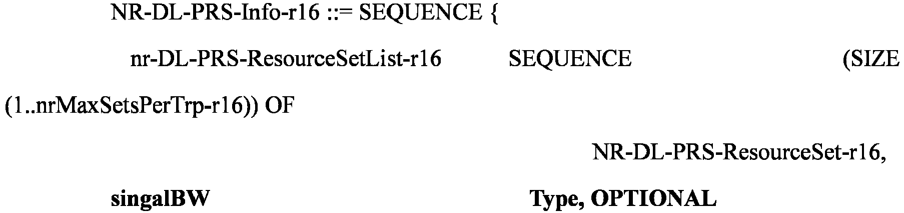

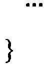

Similar to Embodiment 1-4A and Embodiment 1-4B, Embodiment 1-10A and Embodiment 1-10B can be obtained (i.e., a combination of Embodiment 1-10 and Embodiment 1-9).

### Embodiment 1-11

Downlink positioning signals corresponding to one or more current TRPs are indicated in NR-DL-PRS-Info.

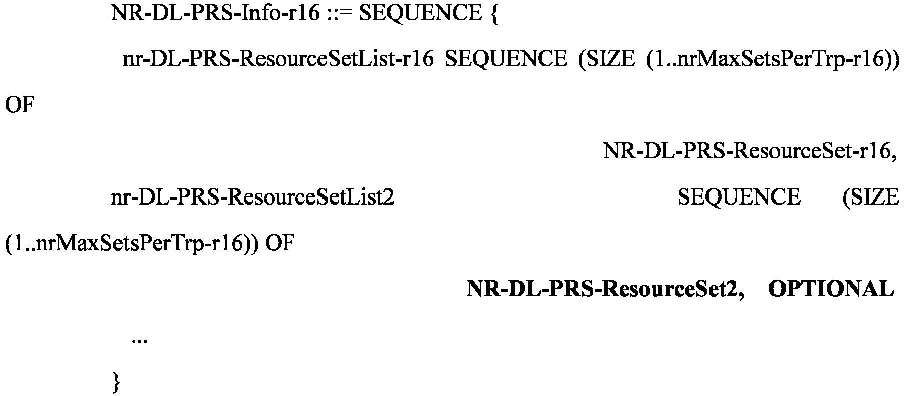

Here, "nr-DL-PRS-ResourceSetList2" represents a new signal that can be aggregated with the original signal (indicated by nr-DL-PRS-ResourceSetList-r16), and different options can be provided for "NR-DL-PRS-ResourceSet2".

When Embodiment 1-11 is combined with Embodiment 1-9, NR-DL-PRS-ResourceSet2 may be identical to existing NR-DL-PRS-ResourceSet-r16 or contain some of the parameters in NR-DL-PRS-ResourceSet-r16.

NR-DL-PRS-ResourceSet2 may contain all or some of the parameters in NR-DL-PRS-ResourceSet-r16, and frequency domain-related indication information used to indicate a frequency domain starting position of a signal.

### Embodiment 1-12

Embodiment 1-12 corresponds to Embodiment 1-3, except that the modification in the bold font is applied in NR-DL-PRS-ResourceSet. Description of the newly-added field is similar to that of Embodiment 1-3.

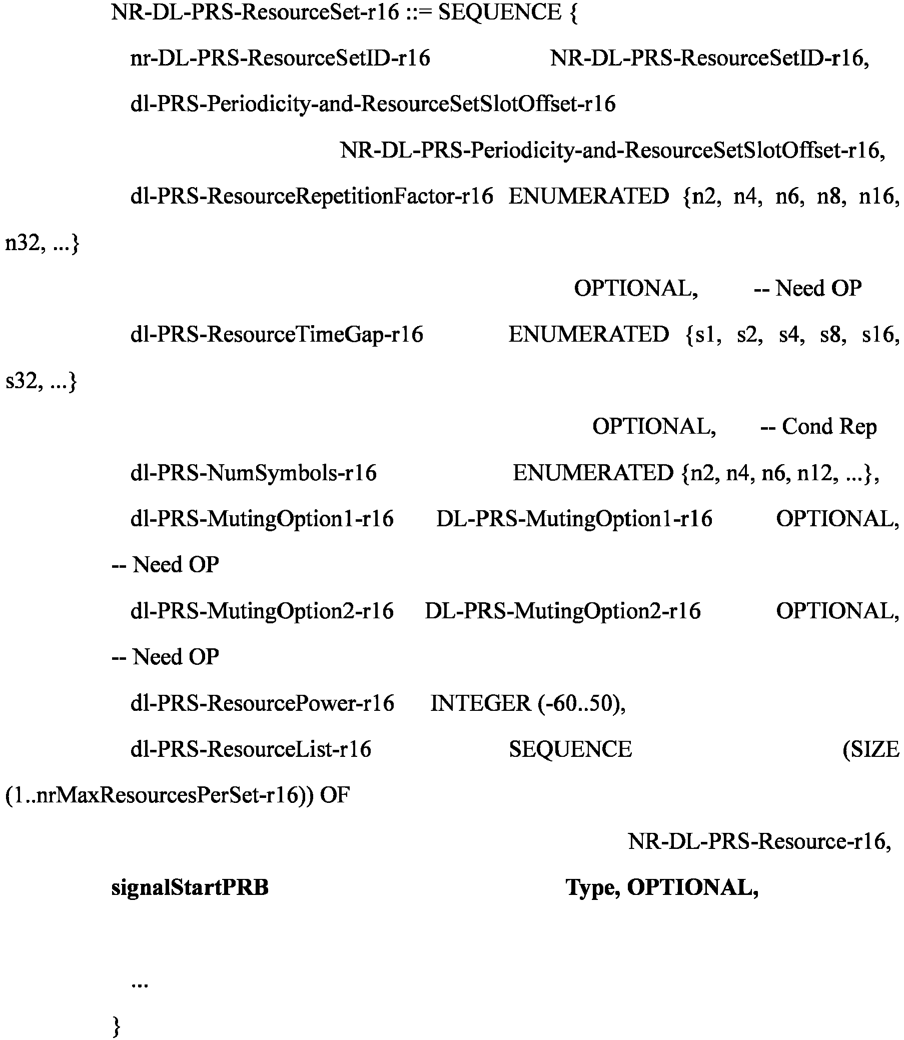

### Embodiment 1-13

Embodiment 1-13 corresponds to Embodiment 1-4, except that the modification in the bold font is applied in NR-DL-PRS-ResourceSet. Description of the newly-added field is similar to that of Embodiment 1-4.

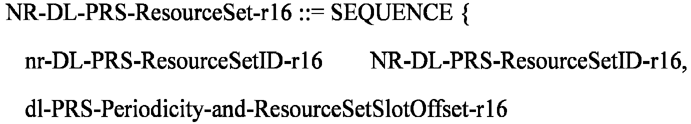

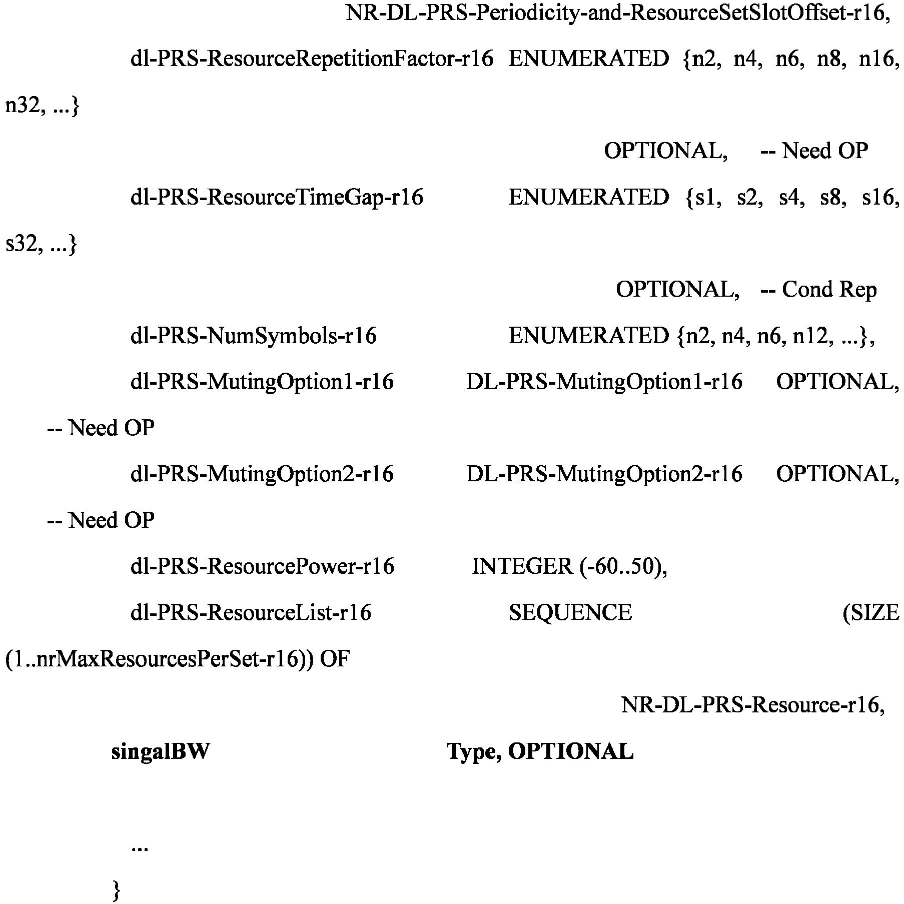

Similar to Embodiment 1-4A and Embodiment 1-4B, Embodiment 1-13A and Embodiment 1-13B can be obtained (i.e., a combination of Embodiment 1-13 and Embodiment 1-12).

### Embodiment 1-14

Downlink positioning signals corresponding to one or more current TRPs are indicated in NR-DL-PRS-ResourceSet.

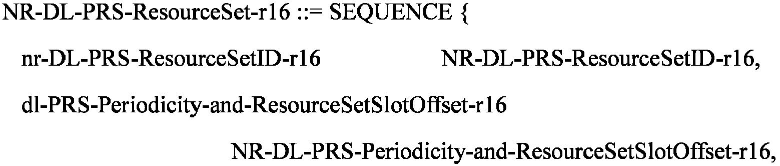

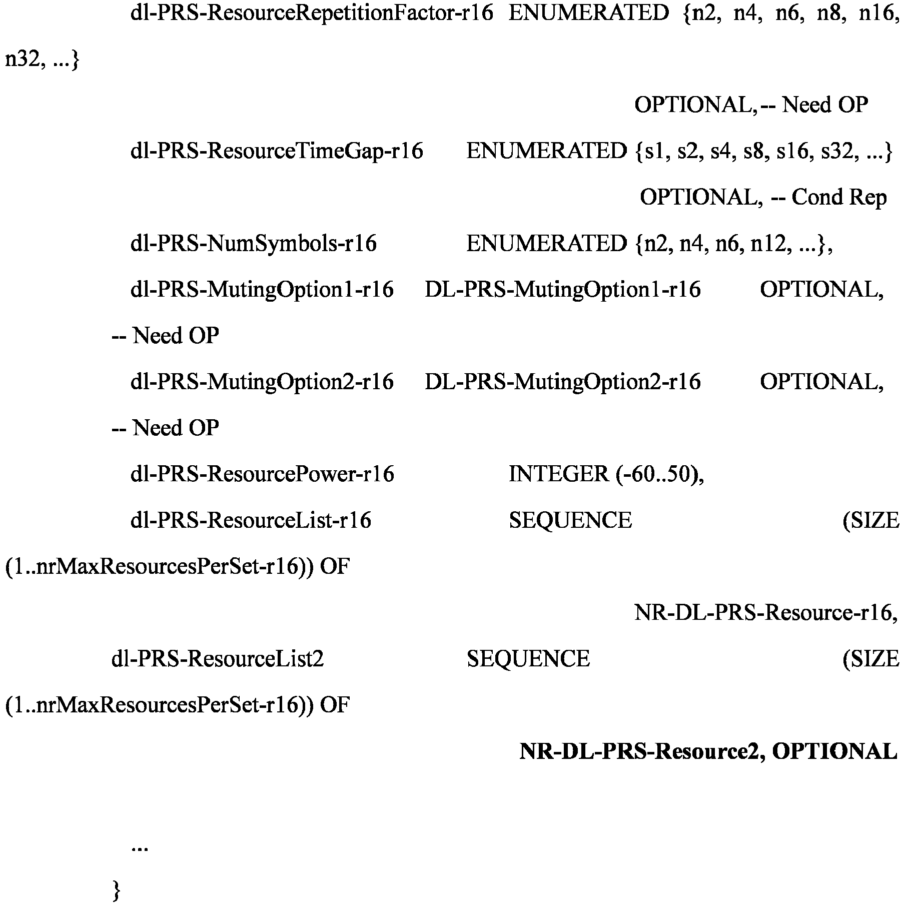

Here, "dl-PRS-ResourceList2" represents a new signal, and different options can be provided for "NR-DL-PRS-Resource2".

When Embodiment 1-14 is combined with Embodiment 1-12, NR-DL-PRS-Resource2 may be identical to existing NR-DL-PRS-Resource-r16 or contain some of the parameters in NR-DL-PRS-Resource-r16.

NR-DL-PRS-Resource2 may contain all or some of the parameters in NR-DL-PRS-Resource-r16, and frequency domain-related indication information used to indicate a frequency domain starting position of a signal.

### Embodiment 1-15

Embodiment 1-15 corresponds to Embodiment 1-3, except that the modification in the bold font is applied in NR-DL-PRS-Resource. Description of the newly-added field is similar to that of Embodiment 1-3.

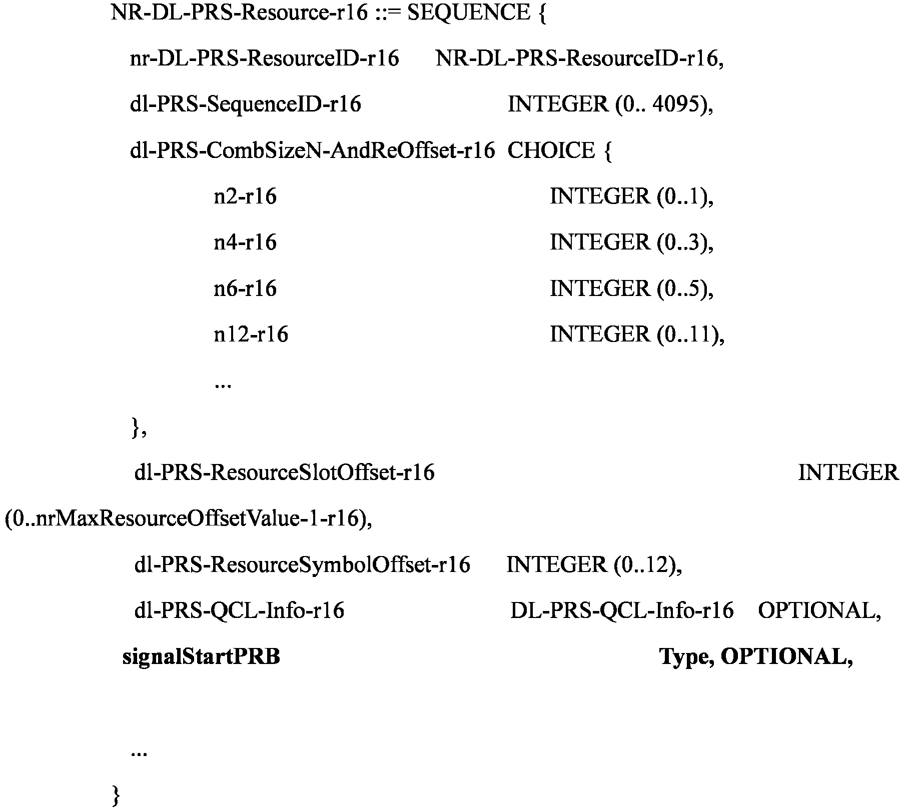

### Embodiment 1-16

Embodiment 1-16 corresponds to Embodiment 1-4, except that the modification in the bold font is applied in NR-DL-PRS-Resource. Description of the newly-added field is similar to that of Embodiment 1-4.

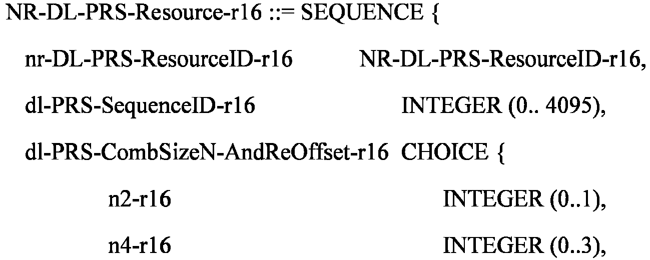

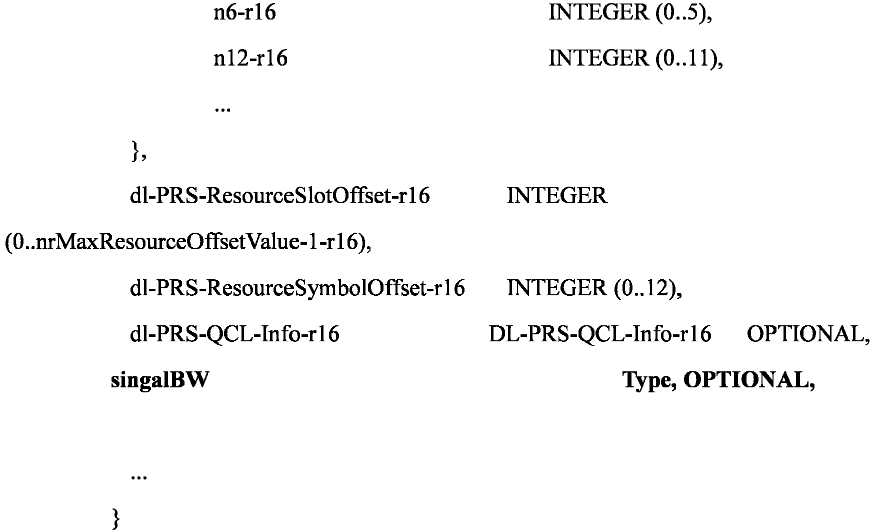

Similar to Embodiment 1-4A and Embodiment 1-4B, Embodiment 1-16A and Embodiment 1-16B can be obtained (i.e., a combination of Embodiment 1-16 and Embodiment 1-15).

### Embodiment 1-17

Downlink positioning signals corresponding to one or more current TRPs are indicated in NR-DL-PRS-Resource.

In some embodiments, a total equivalent bandwidth of the plurality of downlink positioning signals included in the first downlink positioning signal set can be smaller than or equal to a second threshold value.

Optionally, the second threshold value can be preconfigured, or agreed upon in a protocol, or determined based on a terminal capability. For example, the second threshold value is pre-configured with respect to a frequency bandwidth (namely, NR operating band) or is agreed upon in a protocol with respect to the frequency bandwidth, or the second threshold value is pre-configured with respect to a frequency range or is agreed upon in a protocol with respect to the frequency range.

For example, the second threshold value corresponding to different frequency bandwidths may be specified with different values.

For example, the second threshold value corresponding to different Frequency Ranges (FRs) may be specified different values. For example, each of an FR1 and an FR2 may be specified to correspond to a second threshold value.

Optionally, the second threshold value can be determined based on terminal capability reporting information of the terminal device. For example, the terminal capability reporting information of the terminal device is determined based on a frequency bandwidth; or the terminal capability reporting information of the terminal device is determined based on a frequency range.

For example, the terminal capability reporting information may take different values for different frequency bandwidths.

For example, the terminal capability reporting information may take different values for different frequency ranges. For example, terminal capability reporting information corresponding to the FR1 and the FR2 may be reported separately.

In some embodiments, the total equivalent bandwidth of the plurality of downlink positioning signals can be a sum of bandwidths of the plurality of downlink positioning signals. For example, the total equivalent bandwidth of the plurality of downlink positioning signals being the sum of bandwidths of the plurality of downlink positioning signals may be defined as a first manner of total equivalent bandwidth. For example, reference can be made to Embodiment 1-18. This way, only an actual bandwidth of the positioning reference signal is considered, which can further place a higher demand on the terminal to further satisfy a higher demand on the positioning accuracy.

In some embodiments, the total equivalent bandwidth of the plurality of downlink positioning signals can be a bandwidth between a lowest frequency position of the plurality of downlink positioning signals and a highest frequency position of the plurality of downlink positioning signals. For example, the total equivalent bandwidth of the plurality of downlink positioning signals being the bandwidth between the lowest frequency position of the plurality of downlink positioning signals and the highest frequency position of the plurality of downlink positioning signals may be defined as a second manner of total equivalent bandwidth. For example, reference can be made to Embodiment 1-19. Taking all bandwidths spanned by the aggregated signals into consideration better resembles an actual hardware implementation, and lowers processing requirements on the terminal, which provides greater flexibility for the implementation of the terminal, allowing more terminals to support this characteristic.

### Embodiment 1-18

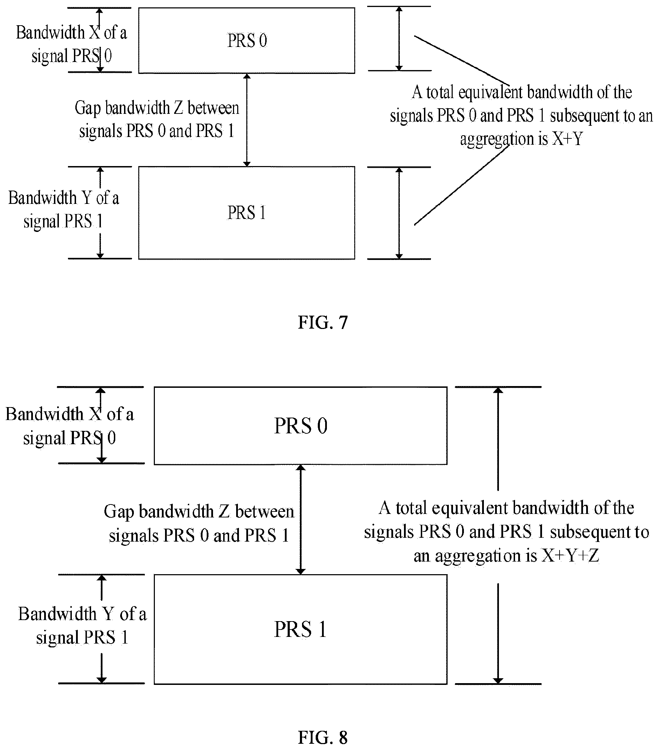

As an example, an aggregation of two downlink positioning signals (hypothetically denoted as a PRS 0 and a PRS 1) is described. Such an example can be developed to a case of an aggregation of more positioning signals. Assuming that the PRS 0 has a signal bandwidth of X (in unit of RB, or hertz (Hz), or megahertz (MHz), without limitation), the PRS 1 has a signal bandwidth of Y, and a gap bandwidth between the PRS 0 and the PRS 1 is Z, a total equivalent bandwidth of the PRS 0 and PRS 1 subsequent to the aggregation is X+Y in accordance with the first manner of total equivalent bandwidth (the total equivalent bandwidth of the plurality of downlink positioning signals is the sum of bandwidths of the plurality of downlink positioning signals), as illustrated in FIG. 7.

### Embodiment 1-19

As an example, an aggregation of two downlink positioning signals (hypothetically denoted as a PRS 0 and a PRS 1) is described. Such an example can be developed to a case of an aggregation of more positioning signals. Assuming that the PRS 0 has the signal bandwidth of X (in unit of RB, or Hz, or MHz, without limitation), the PRS 1 has the signal bandwidth of Y, and the gap bandwidth between the PRS 0 and the PRS 1 is Z, the total equivalent bandwidth of the PRS 0 and PRS 1 subsequent to the aggregation is X+Y+Z in accordance with the second manner of total equivalent bandwidth (the total equivalent bandwidth of the plurality of downlink positioning signals is the bandwidth between the lowest frequency position of the plurality of downlink positioning signals and the highest frequency position of the plurality of downlink positioning signals), as illustrated in FIG. 8.

### Embodiment 1-20

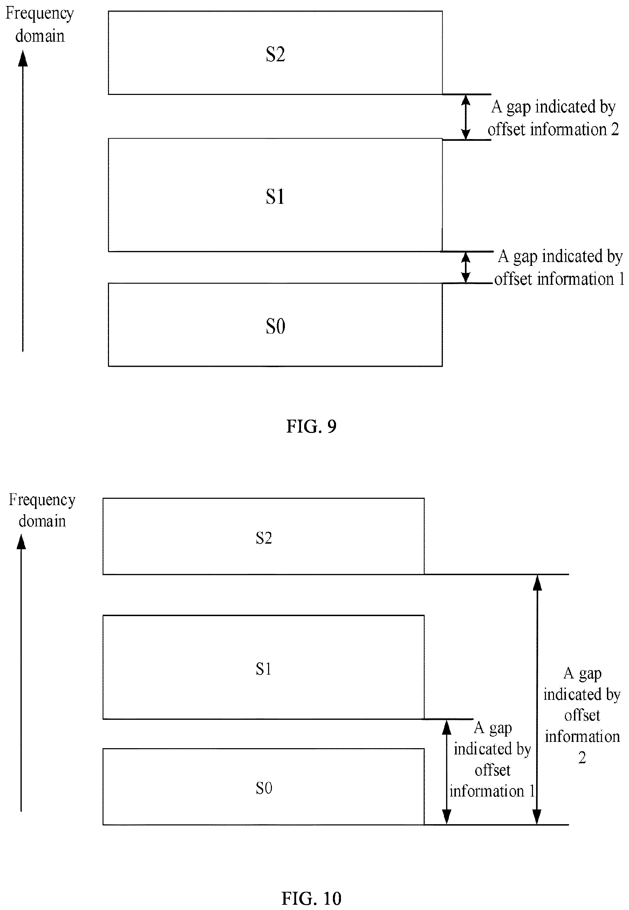

As an example, the first downlink positioning signal set contains three downlink positioning signals, which are denoted as S0, S1, and S2, respectively. The offset information indicates a gap between different downlink positioning signals. For example, two pieces of offset information in FIG. 9 indicate a gap between S1 and S0 and a gap between S2 and S1, respectively, i.e., a gap between an end position of the signal S0 in the frequency domain and a start position of the signal S1 in the frequency domain and a gap between an end position of the signal S1 in the frequency domain and a start position of the signal S2 in the frequency domain. The gap indicated by the indication information may be in unit of RB, or Hz, or MHz, or other units of frequency domain resources, and is not limited to any of these examples. In comparison with Embodiment 1-21 and Embodiment 1-22, Embodiment 1-20 has a smaller range of values corresponding to each offset signal indication field, which can save the number of bits and reduce the signaling configuration overhead.

### Embodiment 1-21

As an example, the first downlink positioning signal set contains three downlink positioning signals, which are denoted as S0, S1, and S2, respectively. The offset information indicates, using a same downlink positioning signal (e.g., S0) as a reference point, an offset between another downlink positioning signal and the reference point. For example, two pieces of offset information in FIG. 10 indicate an offset between the start position of S1 in the frequency domain and a start position of S0 in the frequency domain and an offset between the start position of S2 in the frequency domain and the start position of S0 in the frequency domain, respectively. Compared with Embodiment 1-20 and Embodiment 1-22, Embodiment 1-21 using the same reference point avoids determining a start position of each signal in dependence on other signals, thus reducing computational complexity of the terminal in determining a start position of a corresponding signal.

### Embodiment 1-22

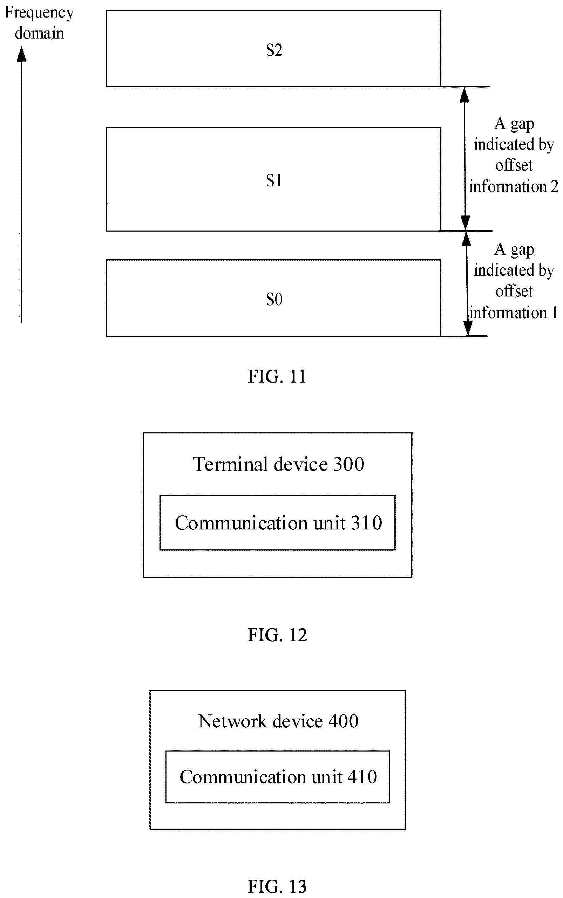

As an example, the first downlink positioning signal set contains three downlink positioning signals, which are denoted as S0, S1, and S2, respectively. The offset information indicates, by using a nearest downlink positioning signal in the frequency domain as a reference point, an offset between a downlink positioning signal and the reference point. For example, two pieces of offset information in FIG. 11 indicate an offset between the start position of S1 in the frequency domain and the start position of S0 in the frequency domain and an offset between the start position of S2 in the frequency domain and the start position of S1 in the frequency domain, respectively. Compared with Embodiment 1-20 and Embodiment 1-21, Embodiment 1-22 can gain part of their respective benefits while losing part of their respective advantages, i.e., a compromise between different benefits and advantages.

Therefore, in the embodiments of the present disclosure, the one or more first downlink positioning signal sets are indicated by the network device by means of the first signaling, and the plurality of downlink positioning signals occupying different frequency domain resources included in each of the one or more first downlink positioning signal sets is used jointly to implement the positioning function. That is, the network device can configure positioning signals, on different carriers, that can be combined to optimize positioning performance.

Method embodiments of the present disclosure are described in detail above with reference to FIG. 4 to FIG. 11. Device embodiments of the present disclosure will be described in detail below with reference to FIG. 12 to FIG. 16. It should be understood that the device embodiments and the method embodiments correspond to each other, and thus similar description may refer to the method embodiments.

FIG. 12 illustrates a schematic block diagram of a terminal device 300 according to an embodiment of the present disclosure. As illustrated in FIG. 12, the terminal device 300 includes a communication unit 310.

The communication unit 310 can be configured to receive first signaling transmitted by a network device. The first signaling can be used to indicate one or more first downlink positioning signal sets. Each of the one or more first downlink positioning signal sets can include a plurality of downlink positioning signals occupying different frequency domain resources. The plurality of downlink positioning signals can be used jointly to implement a positioning function.

In some embodiments, the first signaling can be used to indicate at least one TRP, some or all of downlink positioning signals corresponding to TRPs in the at least one TRP belonging to the one or more first downlink positioning signal sets.

In some embodiments, the first signaling can be used to indicate positioning frequency layers to which the some or all of downlink positioning signals corresponding to TRPs in the at least one TRP belonging to the one or more first downlink positioning signal sets belong.

In some embodiments, the first signaling can be used to indicate a resource set index to which the some or all of downlink positioning signals corresponding to TRPs in the at least one TRP belonging to the one or more first downlink positioning signal sets belong.

In some embodiments, the first signaling can be used to indicate the some or all of downlink positioning signals corresponding to TRPs in the at least one TRP belonging to the one or more first downlink positioning signal sets.

In some embodiments, the plurality of downlink positioning signals included in the first downlink positioning signal set can satisfy one or more of the following conditions: the plurality of downlink positioning signals has a same subcarrier spacing; the plurality of downlink positioning signals has a same comb size; the plurality of downlink positioning signals corresponds to a same type of cyclic prefix; reference RBs corresponding to the plurality of downlink positioning signals have a same absolute frequency domain position; the plurality of downlink positioning signals has a same periodicity; the plurality of downlink positioning signals has a same slot offset in one periodicity; the plurality of downlink positioning signals corresponds to a same repetition factor; the plurality of downlink positioning signals has a same bandwidth; the plurality of downlink positioning signals corresponds to a same time domain offset with respect to an SFNO slot 0 of a reference cell; muting patterns 1 corresponding to the plurality of downlink positioning signals have a same configuration; muting patterns 2 corresponding to the plurality of downlink positioning signals have a same configuration; sequences corresponding to the plurality of downlink positioning signals have a same initial value; the sequences corresponding to the plurality of downlink positioning signals are obtained by using a same original sequence generation method, and by selecting different parts of an original sequence based on different frequency domain positions of the downlink positioning signals; the plurality of downlink positioning signals corresponds to a same RE offset on a 1-st symbol; the plurality of downlink positioning signals corresponds to a same starting slot with respect to downlink positioning signal resource sets in which the plurality of downlink positioning signals is located; the plurality of downlink positioning signals corresponds to a same starting symbol of a slot; the plurality of downlink positioning signals has a same number of symbols; the plurality of downlink positioning signals corresponds to same quasi-colocation information; source reference signals in the quasi-colocation information corresponding to the plurality of downlink positioning signals are mutually quasi-co-located; the plurality of downlink positioning signals corresponds to a same quasi-colocation type; the plurality of downlink positioning signals corresponds to a same TRP; downlink positioning signal resource sets corresponding to the plurality of downlink positioning signals have a same identity; downlink positioning signal resources corresponding to the plurality of downlink positioning signals have a same identity; the plurality of downlink positioning signals is located in a same slot; the plurality of downlink positioning signals is located in a first time length, the first time length being in unit of one of symbol, slot, second, millisecond, microsecond, and nanosecond; the plurality of downlink positioning signals is aligned on symbols; symbols occupied by one of the plurality of downlink positioning signals which has a minimum number of symbols overlap others of the plurality of downlink positioning signals; the plurality of downlink positioning signals is contiguous in a frequency domain, or the plurality of downlink positioning signals occupies contiguous RBs in the frequency domain; a gap in the frequency domain between two of the plurality of downlink positioning signals that are adjacent to each other in the frequency domain is smaller than a first threshold value; and the plurality of downlink positioning signals is in a same measurement gap.

In some embodiments, the first time length can be preconfigured or can be agreed upon in a protocol, or the first time length can be determined based on a terminal capability of the terminal device.

In some embodiments, the first threshold value can be preconfigured or can be agreed upon in a protocol, or the first threshold value can be determined based on a positioning signal bandwidth, or the first threshold value can be determined based on an operating frequency band.

In some embodiments, the plurality of downlink positioning signals included in the first downlink positioning signal set can belong to different positioning frequency layers.

In some embodiments, the different positioning frequency layers can be in a same operating frequency band.

In some embodiments, one or more downlink positioning signals corresponding to one positioning frequency layer can belong to one first downlink positioning signal set.

In some embodiments, a correspondence between the plurality of downlink positioning signals in the first downlink positioning signal set can be indicated by one of the following signaling: *NR-Multi-RTT-ProvideAssistanceData, NR-DL-AoD-ProvideAssistanceData, NR-DL-TDOA-ProvideAssistanceData, NR-DL-PRS-AssistanceData, NR-SelectedDL-PRS-IndexList,* and *NR-SelectedDL-PRS-IndexListPerFreq.*

In some embodiments, a correspondence between the plurality of downlink positioning signals included in the first downlink positioning signal set and positioning frequency layers can be indicated by one of the following signaling: *NR-Multi-RTT ProvideAssistanceData, NR-DL-AoD-ProvideAssistanceData, NR-DL-TDOA-ProvideAssistanceData, NR-DL-PRS-AssistanceData, NR-SelectedDL-PRS-IndexList,* and *NR-SelectedDL-PRS-IndexListPerFreq.*

In some embodiments, the plurality of downlink positioning signals included in the first downlink positioning signal set can belong to a same positioning frequency layer.

In some embodiments, the first signaling can be transmitted by means of at least one of the following signaling: *NR-DL-PRS AssistanceDataPerFreq; NR-DL-P RS-AssistanceDataPerTRP; nr-DL-PRS-Info; NR-DL-PRS-ResourceSet;* or *NR-DL-PRS-Resource.*

In some embodiments, the first signaling can include frequency domain indication information, the frequency domain indication information being used to indicate frequency domain information of the plurality of downlink positioning signals.

In some embodiments, the frequency domain indication information can be used to indicate one or more of frequency domain starting positions of the plurality of downlink positioning signals, frequency domain offset information of the plurality of downlink positioning signals, and frequency domain bandwidths of the plurality of downlink positioning signals.

In some embodiments, the frequency domain offset information can be used to indicate a frequency domain gap between different downlink positioning signals; or the frequency domain offset information can be used to indicate a frequency domain gap between a downlink positioning signal other than a 1-st downlink positioning signal of the plurality of downlink positioning signals and the 1-st downlink positioning signal; or the frequency domain offset information can be used to indicate a frequency domain gap between two adjacent starting positions of the plurality of downlink positioning signals.

In some embodiments, downlink positioning signals corresponding to one or more TRPs can be indicated in the first signaling.

In some embodiments, a total equivalent bandwidth of the plurality of downlink positioning signals included in the first downlink positioning signal set can be smaller than or equal to a second threshold value.

In some embodiments, the second threshold value can be preconfigured, or agreed upon in a protocol, or determined based on a terminal capability.

In some embodiments, the second threshold value can be preconfigured with respect to a frequency bandwidth or agreed upon in a protocol with respect to the frequency bandwidth, or the second threshold value can be preconfigured with respect to a frequency range or agreed upon in a protocol with respect to the frequency range.

In some embodiments, the second threshold value can be determined based on terminal capability reporting information of the terminal device.

In some embodiments, the terminal capability reporting information of the terminal device can be determined based on a frequency bandwidth; or the terminal capability reporting information of the terminal device can be determined based on a frequency range.

In some embodiments, the total equivalent bandwidth of the plurality of downlink positioning signals can be a sum of bandwidths of the plurality of downlink positioning signals; or the total equivalent bandwidth of the plurality of downlink positioning signals can be a bandwidth between a lowest frequency position of the plurality of downlink positioning signals and a highest frequency position of the plurality of downlink positioning signals.

In some embodiments, each of the plurality of downlink positioning signals can include a PRS and/or an SSB.

In some embodiments, the first signaling can be transmitted according to an LTE positioning protocol.

In some embodiments, the network device can be a positioning server.

In some embodiments, the first signaling can be transmitted by means of at least one of the following signaling: *NR-Multi-RTT ProvideAssistanceData; NR-DL-AoD-ProvideAssistanceData; NR-DL-TDOA-ProvideAssistanceData; NR-DL-PRS-AssistanceData;* or *NR-SelectedDL-PRS-IndexList.*

In some embodiments, the first signaling can be RRC signaling.

In some embodiments, the network device can be a serving base station of the terminal device.

In some embodiments, the communication unit can be a communication interface or transceiver, or a communication chip or an input-output interface of a system-on-chip.

It should be understood that the terminal device 300 according to the embodiments of the present disclosure may correspond to the terminal device according to the method embodiments of the present disclosure. In addition, the above and other operations and/or functions of each unit in the terminal device 300 are respectively intended to implement corresponding processes of the terminal device in the method 200 illustrated in FIG. 4. For brevity, details thereof will be omitted herein.

FIG. 13 illustrates a schematic block diagram of a network device 400 according to an embodiment of the present disclosure. As illustrated in FIG. 13, the network device 400 includes a communication unit 410.

The communication unit 410 can be configured to transmit first signaling to a terminal device. The first signaling can be used to indicate one or more first downlink positioning signal sets. Each of the one or more first downlink positioning signal sets can include a plurality of downlink positioning signals occupying different frequency domain resources. The plurality of downlink positioning signals can be used jointly to implement a positioning function.

In some embodiments, the first signaling can be used to indicate at least one TRP, some or all of downlink positioning signals corresponding to TRPs in the at least one TRP belonging to the one or more first downlink positioning signal sets.

In some embodiments, the first signaling can be used to indicate positioning frequency layers to which the some or all of downlink positioning signals corresponding to TRPs in the at least one TRP belonging to the one or more first downlink positioning signal sets belong.

In some embodiments, the first signaling can be used to indicate a resource set index to which the some or all of downlink positioning signals corresponding to TRPs in the at least one TRP belonging to the one or more first downlink positioning signal sets belong.

In some embodiments, the first signaling can be used to indicate the some or all of downlink positioning signals corresponding to TRPs in the at least one TRP belonging to the one or more first downlink positioning signal sets.

In some embodiments, the plurality of downlink positioning signals included in the first downlink positioning signal set can satisfy one or more of the following conditions: the plurality of downlink positioning signals has a same subcarrier spacing; the plurality of downlink positioning signals has a same comb size; the plurality of downlink positioning signals corresponds to a same type of cyclic prefix; reference RBs corresponding to the plurality of downlink positioning signals have a same absolute frequency domain position; the plurality of downlink positioning signals has a same periodicity; the plurality of downlink positioning signals has a same slot offset in one periodicity; the plurality of downlink positioning signals corresponds to a same repetition factor; the plurality of downlink positioning signals has a same bandwidth; the plurality of downlink positioning signals corresponds to a same time domain offset with respect to an SFNO slot 0 of a reference cell; muting patterns 1 corresponding to the plurality of downlink positioning signals have a same configuration; muting patterns 2 corresponding to the plurality of downlink positioning signals have a same configuration; sequences corresponding to the plurality of downlink positioning signals have a same initial value; the sequences corresponding to the plurality of downlink positioning signals are obtained by using a same original sequence generation method, and by selecting different parts of an original sequence based on different frequency domain positions of the downlink positioning signals; the plurality of downlink positioning signals corresponds to a same RE offset on a 1-st symbol; the plurality of downlink positioning signals corresponds to a same starting slot with respect to downlink positioning signal resource sets in which the plurality of downlink positioning signals is located; the plurality of downlink positioning signals corresponds to a same starting symbol of a slot; the plurality of downlink positioning signals has a same number of symbols; the plurality of downlink positioning signals corresponds to same quasi-colocation information; source reference signals in the quasi-colocation information corresponding to the plurality of downlink positioning signals are mutually quasi-co-located; the plurality of downlink positioning signals corresponds to a same quasi-colocation type; the plurality of downlink positioning signals corresponds to a same TRP; downlink positioning signal resource sets corresponding to the plurality of downlink positioning signals have a same identity; downlink positioning signal resources corresponding to the plurality of downlink positioning signals have a same identity; the plurality of downlink positioning signals is located in a same slot; the plurality of downlink positioning signals is located in a first time length, the first time length being in unit of one of symbol, slot, second, millisecond, microsecond, and nanosecond; the plurality of downlink positioning signals is aligned on symbols; symbols occupied by one of the plurality of downlink positioning signals which has a minimum number of symbols overlap others of the plurality of downlink positioning signals; the plurality of downlink positioning signals is contiguous in a frequency domain, or the plurality of downlink positioning signals occupies contiguous RBs in the frequency domain; a gap in the frequency domain between two of the plurality of downlink positioning signals that are adjacent to each other in the frequency domain is smaller than a first threshold value; and the plurality of downlink positioning signals is in a same measurement gap.

In some embodiments, the first time length can be preconfigured or can be agreed upon in a protocol, or the first time length can be determined based on a terminal capability of the terminal device.

In some embodiments, the first threshold value can be preconfigured or can be agreed upon in a protocol, or the first threshold value can be determined based on a positioning signal bandwidth, or the first threshold value can be determined based on an operating frequency band.

In some embodiments, the plurality of downlink positioning signals included in the first downlink positioning signal set can belong to different positioning frequency layers.

In some embodiments, the different positioning frequency layers can be in a same operating frequency band.

In some embodiments, one or more downlink positioning signals corresponding to one positioning frequency layer can belong to one first downlink positioning signal set.

In some embodiments, a correspondence between the plurality of downlink positioning signals in the first downlink positioning signal set can be indicated by one of the following signaling: *NR-Multi-RTT-ProvideAssistanceData, NR-DL-AoD-ProvideAssistanceData, NR-DL-TDOA-ProvideAssistanceData, NR-DL-PRS-AssistanceData, NR-SelectedDL-PRS-IndexList,* and *NR-SelectedDL-PRS-IndexListPerFreq.*

In some embodiments, a correspondence between the plurality of downlink positioning signals included in the first downlink positioning signal set and positioning frequency layers can be indicated by one of the following signaling: *NR-Multi-RTT ProvideAssistanceData, NR-DL-AoD-ProvideAssistanceData, NR-DL-TDOA-ProvideAssistanceData, NR-DL-PRS-AssistanceData, NR-SelectedDL-PRS-IndexList,* and *NR-SelectedDL-PRS-IndexListPerFreq.*

In some embodiments, the plurality of downlink positioning signals included in the first downlink positioning signal set can belong to a same positioning frequency layer.

In some embodiments, the first signaling can be transmitted by means of at least one of the following signaling: *NR-DL-PRS AssistanceDataPerFreq; NR-DL-P RS-AssistanceDataPerTRP; nr-DL-PRS-Info; NR-DL-PRS-ResourceSet;* or *NR-DL-PRS-Resource.*

In some embodiments, the first signaling can include frequency domain indication information, the frequency domain indication information being used to indicate frequency domain information of the plurality of downlink positioning signals.

In some embodiments, the frequency domain indication information can be used to indicate one or more of frequency domain starting positions of the plurality of downlink positioning signals, frequency domain offset information of the plurality of downlink positioning signals, and frequency domain bandwidths of the plurality of downlink positioning signals.

In some embodiments, the frequency domain offset information can be used to indicate a frequency domain gap between different downlink positioning signals; or the frequency domain offset information can be used to indicate a frequency domain gap between a downlink positioning signal other than a 1-st downlink positioning signal of the plurality of downlink positioning signals and the 1-st downlink positioning signal; or the frequency domain offset information can be used to indicate a frequency domain gap between two adjacent starting positions of the plurality of downlink positioning signals.

In some embodiments, downlink positioning signals corresponding to one or more TRPs can be indicated in the first signaling.

In some embodiments, a total equivalent bandwidth of the plurality of downlink positioning signals included in the first downlink positioning signal set can be smaller than or equal to a second threshold value.

In some embodiments, the second threshold value can be preconfigured, or agreed upon in a protocol, or determined based on a terminal capability.

In some embodiments, the second threshold value can be preconfigured with respect to a frequency bandwidth or agreed upon in a protocol with respect to the frequency bandwidth, or the second threshold value can be preconfigured with respect to a frequency range or agreed upon in a protocol with respect to the frequency range.

In some embodiments, the second threshold value can be determined based on terminal capability reporting information of the terminal device.

In some embodiments, the terminal capability reporting information of the terminal device can be determined based on a frequency bandwidth; or the terminal capability reporting information of the terminal device can be determined based on a frequency range.

In some embodiments, the total equivalent bandwidth of the plurality of downlink positioning signals can be a sum of bandwidths of the plurality of downlink positioning signals; or the total equivalent bandwidth of the plurality of downlink positioning signals can be a bandwidth between a lowest frequency position of the plurality of downlink positioning signals and a highest frequency position of the plurality of downlink positioning signals.

In some embodiments, each of the plurality of downlink positioning signals can include a PRS and/or an SSB.

In some embodiments, the first signaling can be transmitted according to an LTE positioning protocol.

In some embodiments, the network device can be a positioning server.

In some embodiments, the first signaling can be transmitted by means of at least one of the following signaling: *NR-Multi-RTT ProvideAssistanceData; NR-DL-AoD-ProvideAssistanceData; NR-DL-TDOA-ProvideAssistanceData; NR-DL-PRS-AssistanceData;* or *NR-SelectedDL-PRS-IndexList.*

In some embodiments, the first signaling can be RRC signaling.

In some embodiments, the network device can be a serving base station of the terminal device.

In some embodiments, the communication unit can be a communication interface or transceiver, or a communication chip or an input-output interface of a system-on-chip.

It should be understood that the network device 400 according to the embodiments of the present disclosure may correspond to the network device according to the method embodiments of the present disclosure. In addition, the above and other operations and/or functions of each unit in the network device 400 are respectively intended to implement corresponding processes of the network device in the method 200 illustrated in FIG. 4. For brevity, details thereof will be omitted herein.

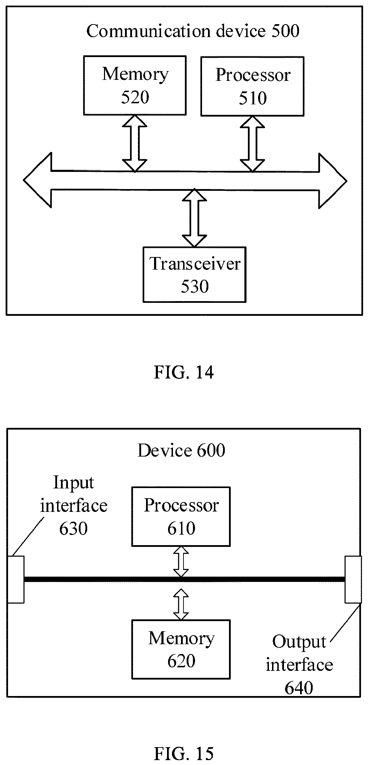

FIG. 14 is a schematic block diagram of a communication device 500 according to an embodiment of the present disclosure. The communication device 500 illustrated in FIG. 14 includes a processor 510. The processor 510 is configured to invoke and run a computer program from a memory to perform the method according to any of the embodiments of the present disclosure.

Optionally, as illustrated in FIG. 14, the communication device 500 may further include a memory 520. The processor 510 may invoke and run a computer program from the memory 520 to perform the method according to any of the embodiments of the present disclosure.

Here, the memory 520 may be a separate component independent of the processor 510, or may be integrated in the processor 510.

Optionally, as illustrated in FIG. 14, the communication device 500 may further include a transceiver 530. The processor 510 may control the transceiver 530 to communicate with other devices, specifically, to transmit information or data to other devices, or receive information or data transmitted by other devices.

Here, the transceiver 530 may include a transmitter and a receiver. The transceiver 530 may further include one or more antennas.

Optionally, the communication device 500 may specifically be a network device according to an embodiment of the present disclosure. The communication device 500 may execute corresponding processes implemented by the network device in the method according to any of the embodiments of the present disclosure. For brevity, details thereof will be omitted herein.

Optionally, the communication device 500 may specifically be the terminal device according to any of the embodiments of the present disclosure. The communication device 500 may implement corresponding processes implemented by the terminal device in the method according to any of the embodiments of the present disclosure. For brevity, details thereof will be omitted herein.

FIG. 15 is a schematic block diagram of a device according to an embodiment of the present disclosure. A device 600 illustrated in FIG. 15 includes a processor 610. The processor 610 is configured to invoke and run a computer program from a memory to perform the method according to any of the embodiments of the present disclosure.

Optionally, as illustrated in FIG. 15, the device 600 may further include a memory 620. The processor 610 may invoke and run a computer program from the memory 620 to perform the method according to any of the embodiments of the present disclosure.

Here, the memory 620 may be a separate component independent of the processor 610, or may be integrated in the processor 610.

Optionally, the device 600 may further include an input interface 630. The processor 610 can control the input interface 630 to communicate with other devices or chips, specifically, to obtain information or data transmitted by other devices or chips.

Optionally, the device 600 may further include an output interface 640. The processor 610 can control the output interface 640 to communicate with other devices or chips, specifically to output information or data to other devices or chips.

Optionally, the device can be applied to the network device according to any of the embodiments of the present disclosure. In addition, the device can implement corresponding processes implemented by the network device in the method according to any of the embodiments of the present disclosure. For brevity, details thereof will be omitted herein.

Optionally, the device can be applied to the terminal device according to any of the embodiments of the present disclosure. The device can implement corresponding processes implemented by the terminal device in the method according to any of the embodiments of the present disclosure. For brevity, details thereof will be omitted herein.

It should be understood that the device mentioned in the embodiments of the present disclosure may also be referred to as a chip, e.g., a system-level chip, a system-chip, a chip system, or a system-on-chip.

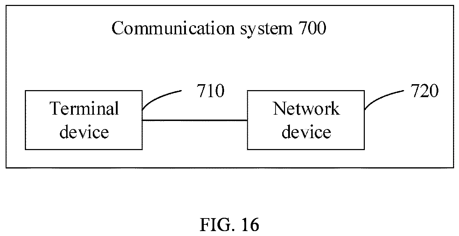

FIG. 16 is a schematic block diagram of a communication system 700 according to an embodiment of the present disclosure. As illustrated in FIG. 16, the communication system 700 includes a terminal device 710 and a network device.

Here, the terminal device 710 can be configured to implement the corresponding functions implemented by the terminal device in the above methods. The network device 720 can be configured to implement corresponding functions implemented by the network device in the above methods. For brevity, details thereof will be omitted herein.

It should be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

It can be appreciated that the memory in the embodiments of the present disclosure may be a transitory memory or a non-transitory memory, or may include both transitory and non-transitory memories. Here, the non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM), which is used as an external cache. As illustrative, rather than limiting, many forms of RAMs are available, including for example Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), and Direct Rambus RAM (DR RAM). It should be be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

An embodiment of the present disclosure also provides a computer-readable storage medium for storing a computer program.

Optionally, the computer-readable storage medium can be applied to the network device in the embodiment of the present disclosure, and the computer program can cause a computer to perform corresponding procedures implemented by the network device in the method according to any of the embodiments of the present disclosure. Details thereof will be omitted here for simplicity.

Optionally, the computer-readable storage medium can be applied to the terminal device in the embodiment of the present disclosure, and the computer program can cause a computer to perform corresponding procedures implemented by the terminal device in the method according to any of the embodiments of the present disclosure. Details thereof will be omitted here for simplicity.

An embodiment of the present disclosure also provides a computer program product including computer program instructions.

Optionally, the computer program product can be applied to the network device in the embodiment of the present disclosure, and the computer program instructions can cause a computer to perform corresponding procedures implemented by the network device in the method according to any of the embodiments of the present disclosure. Details thereof will be omitted here for simplicity.

Optionally, the computer program product can be applied to the terminal device in the embodiment of the present disclosure, and the computer program instructions can cause a computer to perform corresponding procedures implemented by the terminal device in the method according to any of the embodiments of the present disclosure. Details thereof will be omitted here for simplicity.

An embodiment of the present disclosure also provides a computer program.

Optionally, the computer program can be applied to the network device in the embodiment of the present disclosure. The computer program, when executed on a computer, can cause the computer to perform corresponding procedures implemented by the network device in the method according to any of the embodiments of the present disclosure. Details thereof will be omitted here for simplicity.

Optionally, the computer program can be applied to the terminal device in the embodiment of the present disclosure. The computer program, when executed on a computer, can cause the computer to perform corresponding procedures implemented by the terminal device in the method according to any of the embodiments of the present disclosure. Details thereof will be omitted here for simplicity.

It can be appreciated by those skilled in the art that units and algorithm steps in the embodiments described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer-readable storage medium. Based on this understanding, all or part of the technical solutions according to the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include various mediums capable of storing program codes, such as a Universal Serial Bus flash drive, a mobile hard disk, an ROM, an RAM, a magnetic disk, or an optical disc.

While the specific embodiments of the present disclosure have been described above, the protect scope of the present disclosure is not limited to these embodiments. Various variants and alternatives can be easily conceived by any of those skilled in the art without departing from the technical scope of the present disclosure. Therefore, these variants and alternatives are to be encompassed by the protect scope of present disclosure as defined by the claims as attached.

## Claims

1. A wireless communication method, comprising:
receiving, by a terminal device, first signaling transmitted by a network device, wherein the first signaling is used to indicate one or more first downlink positioning signal sets, each of the one or more first downlink positioning signal sets comprising a plurality of downlink positioning signals occupying different frequency domain resources, the plurality of downlink positioning signals being used jointly to implement a positioning function.

2. The method according to claim 1, wherein the first signaling is used to indicate at least one Transmission/Reception Point (TRP), some or all of downlink positioning signals corresponding to TRPs in the at least one TRP belonging to the one or more first downlink positioning signal sets.

3. The method according to claim 2, wherein the first signaling is used to indicate positioning frequency layers to which the some or all of downlink positioning signals corresponding to TRPs in the at least one TRP belonging to the one or more first downlink positioning signal sets belong.

4. The method according to claim 2 or 3, wherein the first signaling is used to indicate a resource set index to which the some or all of downlink positioning signals corresponding to TRPs in the at least one TRP belonging to the one or more first downlink positioning signal sets belong.

5. The method according to any one of claims 2 to 4, wherein the first signaling is used to indicate the some or all of downlink positioning signals corresponding to TRPs in the at least one TRP belonging to the one or more first downlink positioning signal sets.

6. The method according to any one of claims 1 to 5, wherein the plurality of downlink positioning signals comprised in the first downlink positioning signal set satisfies one or more of the following conditions:
the plurality of downlink positioning signals has a same subcarrier spacing;
the plurality of downlink positioning signals has a same comb size;
the plurality of downlink positioning signals corresponds to a same type of cyclic prefix;
reference Resource Blocks (RBs) corresponding to the plurality of downlink positioning signals have a same absolute frequency domain position;
the plurality of downlink positioning signals has a same periodicity;
the plurality of downlink positioning signals has a same slot offset in one periodicity;
the plurality of downlink positioning signals corresponds to a same repetition factor;
the plurality of downlink positioning signals has a same bandwidth;
the plurality of downlink positioning signals corresponds to a same time domain offset with respect to a System Frame Number 0 (SFNO) slot 0 of a reference cell;
muting patterns 1 corresponding to the plurality of downlink positioning signals have a same configuration;
muting patterns 2 corresponding to the plurality of downlink positioning signals have a same configuration;
sequences corresponding to the plurality of downlink positioning signals have a same initial value;
the sequences corresponding to the plurality of downlink positioning signals are obtained by using a same generation method of an original sequence, and by selecting different parts of the original sequence based on different frequency domain positions of the downlink positioning signals;
the plurality of downlink positioning signals corresponds to a same Resource Element (RE) offset on a first symbol;
the plurality of downlink positioning signals corresponds to a same starting slot with respect to downlink positioning signal resource sets in which the plurality of downlink positioning signals is located;
the plurality of downlink positioning signals corresponds to a same starting symbol of a slot;
the plurality of downlink positioning signals has a same number of symbols;
the plurality of downlink positioning signals corresponds to same quasi-colocation information;
source reference signals in the quasi-colocation information corresponding to the plurality of downlink positioning signals are mutually quasi-co-located;
the plurality of downlink positioning signals corresponds to a same quasi-colocation type;
the plurality of downlink positioning signals corresponds to a same TRP;
downlink positioning signal resource sets corresponding to the plurality of downlink positioning signals have a same identity;
downlink positioning signal resources corresponding to the plurality of downlink positioning signals have a same identity;
the plurality of downlink positioning signals is located in a same slot;
the plurality of downlink positioning signals is located in a first time length, the first time length being in unit of one of symbol, slot, second, millisecond, microsecond, and nanosecond;
the plurality of downlink positioning signals is aligned on symbols;
symbols occupied by one of the plurality of downlink positioning signals which has a minimum number of symbols overlap others of the plurality of downlink positioning signals;
the plurality of downlink positioning signals is contiguous in a frequency domain, or the plurality of downlink positioning signals occupies contiguous RBs in the frequency domain;
a gap in the frequency domain between two of the plurality of downlink positioning signals that are adjacent to each other in the frequency domain is smaller than a first threshold value; and
the plurality of downlink positioning signals is in a same measurement gap.

7. The method according to claim 6, wherein the first time length is preconfigured or is agreed upon in a protocol, or the first time length is determined based on a terminal capability of the terminal device.

8. The method according to claim 6, wherein the first threshold value is preconfigured or is agreed upon in a protocol, or the first threshold value is determined based on a positioning signal bandwidth, or the first threshold value is determined based on an operating frequency band.

9. The method according to any one of claims 1 to 8, wherein the plurality of downlink positioning signals comprised in the first downlink positioning signal set belongs to different positioning frequency layers.

10. The method according to claim 9, wherein the different positioning frequency layers are in a same operating frequency band.

11. The method according to any one of claims 1 to 8, wherein one or more downlink positioning signals corresponding to one positioning frequency layer belong to one first downlink positioning signal set.

12. The method according to any one of claims 1 to 11, wherein a correspondence between the plurality of downlink positioning signals in the first downlink positioning signal set is indicated by one of the following signaling:

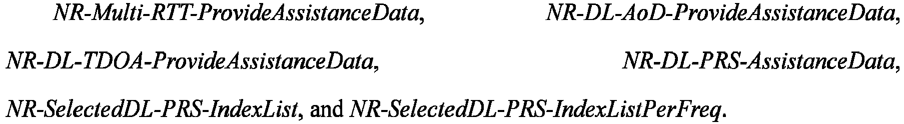

13. The method according to any one of claims 1 to 12, wherein a correspondence between the plurality of downlink positioning signals comprised in the first downlink positioning signal set and positioning frequency layers is indicated by one of the following signaling:

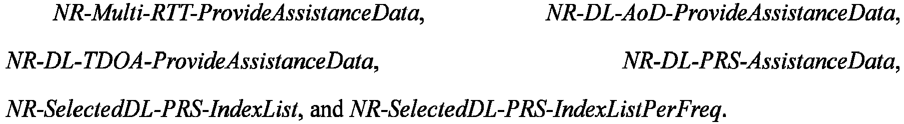

14. The method according to any one of claims 1 to 8, wherein the plurality of downlink positioning signals comprised in the first downlink positioning signal set belongs to a same positioning frequency layer.

15. The method according to any one of claims 1 to 14, wherein the first signaling is transmitted by means of at least one of the following signaling:
*NR-DL-PRS-AssistanceDataPerFreq*;
*NR-DL-PRS-AssistanceDataPerTRP*;
*nr-DL-PRS-Info*;
*NR-DL-PRS-ResourceSet*; or
*NR-DL-PRS-Resource.*

16. The method according to claim 15, wherein the first signaling comprises frequency domain indication information, the frequency domain indication information being used to indicate frequency domain information of the plurality of downlink positioning signals.

17. The method according to claim 16, wherein the frequency domain indication information is used to indicate one or more of
frequency domain starting positions of the plurality of downlink positioning signals, frequency domain offset information of the plurality of downlink positioning signals, and frequency domain bandwidths of the plurality of downlink positioning signals.

18. The method according to claim 17, wherein
the frequency domain offset information is used to indicate a frequency domain gap between different downlink positioning signals; or
the frequency domain offset information is used to indicate a frequency domain gap between a downlink positioning signal other than a first downlink positioning signal of the plurality of downlink positioning signals and the first downlink positioning signal; or
the frequency domain offset information is used to indicate a frequency domain gap between two adjacent starting positions of the plurality of downlink positioning signals.

19. The method according to any one of claims 15 to 18, wherein downlink positioning signals corresponding to one or more TRPs are indicated in the first signaling.

20. The method according to any one of claims 1 to 19, wherein a total equivalent bandwidth of the plurality of downlink positioning signals comprised in the first downlink positioning signal set is smaller than or equal to a second threshold value.

21. The method according to claim 20, wherein the second threshold value is preconfigured, or agreed upon in a protocol, or determined based on a terminal capability.

22. The method according to claim 21, wherein
the second threshold value is preconfigured with respect to a frequency bandwidth or agreed upon in a protocol with respect to the frequency bandwidth, or
the second threshold value is preconfigured with respect to a frequency range or agreed upon in a protocol with respect to the frequency range.

23. The method according to claim 20, wherein the second threshold value is determined based on terminal capability reporting information of the terminal device.

24. The method according to claim 23, wherein
the terminal capability reporting information of the terminal device is determined based on a frequency bandwidth; or
the terminal capability reporting information of the terminal device is determined based on a frequency range.

25. The method according to any one of claims 20 to 24, wherein
the total equivalent bandwidth of the plurality of downlink positioning signals is a sum of bandwidths of the plurality of downlink positioning signals; or
the total equivalent bandwidth of the plurality of downlink positioning signals is a bandwidth between a lowest frequency position of the plurality of downlink positioning signals and a highest frequency position of the plurality of downlink positioning signals.

26. The method according to any one of claims 1 to 25, wherein each of the plurality of downlink positioning signals comprises a Positioning Reference Signal (PRS) and/or a Synchronization Signal Block (SSB).

27. The method according to any one of claims 1 to 26, wherein the first signaling is transmitted according to a Long Term Evolution (LTE) positioning protocol.

28. The method according to claim 27, wherein the network device is a positioning server.

29. The method according to claim 27 or 28, wherein the first signaling is transmitted by means of at least one of the following signaling:
*NR-Multi-RTT ProvideAssistanceData;*
*NR-DL-AoD-ProvideAssistanceData*;
*NR-DL-TDOA-ProvideAssistanceData;*
*NR-DL-PRS-AssistanceData*; or
*NR-SelectedDL-PRS-IndexList.*

30. The method according to any one of claims 1 to 26, wherein the first signaling is Radio Resource Control (RRC) signaling.

31. The method according to claim 30, wherein the network device is a serving base station of the terminal device.

32. A wireless communication method, comprising:
transmitting, by a network device, first signaling to a terminal device, wherein the first signaling is used to indicate one or more first downlink positioning signal sets, each of the one or more first downlink positioning signal sets comprising a plurality of downlink positioning signals occupying different frequency domain resources, the plurality of downlink positioning signals being used jointly to implement a positioning function.

33. The method according to claim 32, wherein the first signaling is used to indicate at least one TRP, some or all of downlink positioning signals corresponding to TRPs in the at least one TRP belonging to the one or more first downlink positioning signal sets.

34. The method according to claim 33, wherein the first signaling is used to indicate positioning frequency layers to which the some or all of downlink positioning signals corresponding to TRPs in the at least one TRP belonging to the one or more first downlink positioning signal sets belong.

35. The method according to claim 33 or 34, wherein the first signaling is used to indicate a resource set index to which the some or all of downlink positioning signals corresponding to TRPs in the at least one TRP belonging to the one or more first downlink positioning signal sets belong.

36. The method according to any one of claims 33 to 35, wherein the first signaling is used to indicate the some or all of downlink positioning signals corresponding to TRPs in the at least one TRP belonging to the one or more first downlink positioning signal sets.

37. The method according to any one of claims 32 to 36, wherein the plurality of downlink positioning signals comprised in the first downlink positioning signal set satisfies one or more of the following conditions:
the plurality of downlink positioning signals has a same subcarrier spacing;
the plurality of downlink positioning signals has a same comb size;
the plurality of downlink positioning signals corresponds to a same type of cyclic prefix;
reference RBs corresponding to the plurality of downlink positioning signals have a same absolute frequency domain position;
the plurality of downlink positioning signals has a same periodicity;
the plurality of downlink positioning signals has a same slot offset in one periodicity;
the plurality of downlink positioning signals corresponds to a same repetition factor;
the plurality of downlink positioning signals has a same bandwidth;
the plurality of downlink positioning signals corresponds to a same time domain offset with respect to an SFNO slot 0 of a reference cell;
muting patterns 1 corresponding to the plurality of downlink positioning signals have a same configuration;
muting patterns 2 corresponding to the plurality of downlink positioning signals have a same configuration;
sequences corresponding to the plurality of downlink positioning signals have a same initial value;
the sequences corresponding to the plurality of downlink positioning signals are obtained by using a same generation method of an original sequence, and by selecting different parts of the original sequence based on different frequency domain positions of the downlink positioning signals;
the plurality of downlink positioning signals corresponds to a same RE offset on a first symbol;
the plurality of downlink positioning signals corresponds to a same starting slot with respect to downlink positioning signal resource sets in which the plurality of downlink positioning signals is located;
the plurality of downlink positioning signals corresponds to a same starting symbol of a slot;
the plurality of downlink positioning signals has a same number of symbols;
the plurality of downlink positioning signals corresponds to same quasi-colocation information;
source reference signals in the quasi-colocation information corresponding to the plurality of downlink positioning signals are mutually quasi-co-located;
the plurality of downlink positioning signals corresponds to a same quasi-colocation type;
the plurality of downlink positioning signals corresponds to a same TRP;
downlink positioning signal resource sets corresponding to the plurality of downlink positioning signals have a same identity;
downlink positioning signal resources corresponding to the plurality of downlink positioning signals have a same identity;
the plurality of downlink positioning signals is located in a same slot;
the plurality of downlink positioning signals is located in a first time length, the first time length being in unit of one of symbol, slot, second, millisecond, microsecond, and nanosecond;
the plurality of downlink positioning signals is aligned on symbols;
symbols occupied by one of the plurality of downlink positioning signals which has a minimum number of symbols overlap others of the plurality of downlink positioning signals;
the plurality of downlink positioning signals is contiguous in a frequency domain, or the plurality of downlink positioning signals occupies contiguous RBs in the frequency domain;
a gap in the frequency domain between two of the plurality of downlink positioning signals that are adjacent to each other in the frequency domain is smaller than a first threshold value; and
the plurality of downlink positioning signals is in a same measurement gap.

38. The method according to claim 37, wherein the first time length is preconfigured or is agreed upon in a protocol, or the first time length is determined based on a terminal capability of the terminal device.

39. The method according to claim 37, wherein the first threshold value is preconfigured or is agreed upon in a protocol, or the first threshold value is determined based on a positioning signal bandwidth, or the first threshold value is determined based on an operating frequency band.

40. The method according to any one of claims 32 to 39, wherein the plurality of downlink positioning signals comprised in the first downlink positioning signal set belongs to different positioning frequency layers.

41. The method according to claim 40, wherein the different positioning frequency layers are in a same operating frequency band.

42. The method according to any one of claims 32 to 39, wherein one or more downlink positioning signals corresponding to one positioning frequency layer belong to one first downlink positioning signal set.

43. The method according to any one of claims 40 to 42, wherein a correspondence between the plurality of downlink positioning signals in the first downlink positioning signal set is indicated by one of the following signaling:

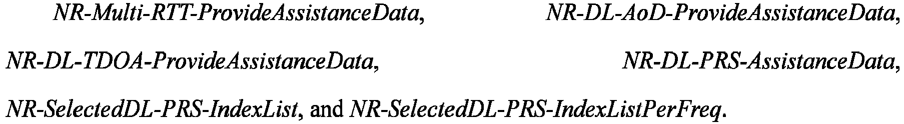

44. The method according to any one of claims 40 to 43, wherein a correspondence between the plurality of downlink positioning signals comprised in the first downlink positioning signal set and positioning frequency layers is indicated by one of the following signaling:

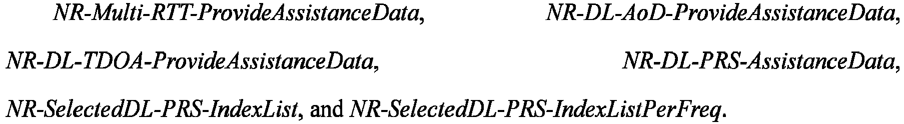

45. The method according to any one of claims 32 to 39, wherein the plurality of downlink positioning signals comprised in the first downlink positioning signal set belongs to a same positioning frequency layer.

46. The method according to any one of claims 32 to 45, wherein the first signaling is transmitted by means of at least one of the following signaling:
*NR-DL-PRS-AssistanceDataPerFreq*;
*NR-DL-PRS-AssistanceDataPerTRP*;
*nr-DL-PRS-Info;*
*NR-DL-PRS-ResourceSet*; or
*NR-DL-PRS-Resource.*

47. The method according to claim 46, wherein the first signaling comprises frequency domain indication information, the frequency domain indication information being used to indicate frequency domain information of the plurality of downlink positioning signals.

48. The method according to claim 47, wherein the frequency domain indication information is used to indicate one or more of
frequency domain starting positions of the plurality of downlink positioning signals, frequency domain offset information of the plurality of downlink positioning signals, and frequency domain bandwidths of the plurality of downlink positioning signals.

49. The method according to claim 48, wherein
the frequency domain offset information is used to indicate a frequency domain gap between different downlink positioning signals; or
the frequency domain offset information is used to indicate a frequency domain gap between a downlink positioning signal other than a first downlink positioning signal of the plurality of downlink positioning signals and the first downlink positioning signal; or
the frequency domain offset information is used to indicate a frequency domain gap between two adjacent starting positions of the plurality of downlink positioning signals.

50. The method according to any one of claims 46 to 49, wherein downlink positioning signals corresponding to one or more TRPs are indicated in the first signaling.

51. The method according to any one of claims 32 to 50, wherein a total equivalent bandwidth of the plurality of downlink positioning signals comprised in the first downlink positioning signal set is smaller than or equal to a second threshold value.

52. The method according to claim 51, wherein the second threshold value is preconfigured, or agreed upon in a protocol, or determined based on a terminal capability.

53. The method according to claim 52, wherein
the second threshold value is preconfigured with respect to a frequency bandwidth or agreed upon in a protocol with respect to the frequency bandwidth, or
the second threshold value is preconfigured with respect to a frequency range or agreed upon in a protocol with respect to the frequency range.

54. The method according to claim 51, wherein the second threshold value is determined based on terminal capability reporting information of the terminal device.

55. The method according to claim 54, wherein
the terminal capability reporting information of the terminal device is determined based on a frequency bandwidth; or
the terminal capability reporting information of the terminal device is determined based on a frequency range.

56. The method according to any one of claims 51 to 55, wherein
the total equivalent bandwidth of the plurality of downlink positioning signals is a sum of bandwidths of the plurality of downlink positioning signals; or
the total equivalent bandwidth of the plurality of downlink positioning signals is a bandwidth between a lowest frequency position of the plurality of downlink positioning signals and a highest frequency position of the plurality of downlink positioning signals.

57. The method according to any one of claims 32 to 56, wherein each of the plurality of downlink positioning signals comprises a PRS and/or an SSB.

58. The method according to any one of claims 32 to 57, wherein the first signaling is transmitted according to an LTE positioning protocol.

59. The method according to claim 58, wherein the network device is a positioning server.

60. The method according to claim 58 or 59, wherein the first signaling is transmitted by means of at least one of the following signaling:
*NR-Multi-RTT-ProvideAssistanceData*;
*NR-DL-AoD-ProvideAssistanceData*;
*NR-DL-TDOA-ProvideAssistanceData;*
*NR-DL-PRS-AssistanceData;* or
*NR-SelectedDL-PRS-IndexList.*

61. The method according to any one of claims 32 to 57, wherein the first signaling is RRC signaling.

62. The method according to claim 61, wherein the network device is a serving base station of the terminal device.

63. A terminal device, comprising:
a communication unit configured to receive first signaling transmitted by a network device, wherein the first signaling is used to indicate one or more first downlink positioning signal sets, each of the one or more first downlink positioning signal sets comprising a plurality of downlink positioning signals occupying different frequency domain resources, the plurality of downlink positioning signals being used jointly to implement a positioning function.

64. A network device, comprising:
a communication unit configured to transmit first signaling to a terminal device, wherein the first signaling is used to indicate one or more first downlink positioning signal sets, each of the one or more first downlink positioning signal sets comprising a plurality of downlink positioning signals occupying different frequency domain resources, the plurality of downlink positioning signals being used jointly to implement a positioning function.

65. A terminal device, comprising a processor and a memory, wherein the memory has a computer program stored thereon, and the processor is configured to invoke and execute the computer program stored in the memory to perform the method according to any one of claims 1 to 31.

66. A network device, comprising a processor and a memory, wherein the memory has a computer program stored thereon, and the processor is configured to invoke and execute the computer program stored in the memory to perform the method according to any one of claims 32 to 62.

67. A chip, comprising a processor configured to invoke and execute a computer program from a memory to cause an apparatus provided with the chip to perform the method according to any one of claims 1 to 31.

68. A chip, comprising a processor configured to invoke and execute a computer program from a memory to cause an apparatus provided with the chip to perform the method according to any one of claims 32 to 62.

69. A computer-readable storage medium, having a computer program stored thereon, wherein the computer program causes a computer to perform the method according to any one of claims 1 to 31.

70. A computer-readable storage medium, having a computer program stored thereon, wherein the computer program causes a computer to perform the method according to any one of claims 32 to 62.

71. A computer program product, comprising computer program instructions, wherein the computer program instructions cause a computer to perform the method according to any one of claims 1 to 31.

72. A computer program product, comprising computer program instructions, wherein the computer program instructions cause a computer to perform the method according to any one of claims 32 to 62.

73. A computer program, causing a computer to perform the method according to any one of claims 1 to 31.

74. A computer program, causing a computer to perform the method according to any one of claims 32 to 62.
